# EUROPEAN PATENT APPLICATION

(11) **EP 4 834 981 A1**
(43) Date of publication of application: **04.11.2026**
(21) Application number: 25173381.2
(22) Date of filing: 29.04.2025
(51) Int. Cl.: C08J 9/00, C08J 9/02, C08J 9/35, C08J 9/12, C08K 7/22, C08K 9/12, C01B 33/157

(54) **IMPROVEMENTS IN AND RELATING TO COMPOSITE MATERIALS COMPRISING BINDER MATERIALS AND POROUS MATERIALS**

(71) Applicant: Thermulon Ltd, Stockton-on-Tees County Durham TS21 3FD (GB)
(72) Inventor: The designation of the inventor has not yet been filed
(74) Representative: Abel & Imray LLP

(57) **Abstract**

A process for making a composite material comprising a porous material affixed to a binder material is disclosed. Preferably, the process comprises: providing a precursor mixture comprising impregnated porous material and precursor material for the binder material, wherein impregnated porous material is porous material impregnated with a chemical gassing agent wherein at least a portion of the chemical gassing agent is located in pores of the porous material, and wherein the precursor material for the binder material is in the form of a liquid and/or solution; and, forming the composite material from the precursor mixture by transforming the precursor material into the binder material and reacting the chemical gassing agent to release a gas, optionally wherein the binder material is a foam material. Also disclosed is an impregnated porous material, a polyol precursor mixture for a polyurethane (PU) and/or polyisocyanurate (PIR) composite foam, an insulation product and a spray foam kit.

## Description

### Field of the Invention

The present invention concerns composite materials comprising a porous material and a binder material, for example in the form of a matrix material. Optionally, the binder material is a foam, such as a polymeric foam. Optionally, the porous material is a particulate porous material. Optionally, the porous material is in the form of particles dispersed in the binder material. Additionally or alternatively, the porous material is in the form of a substrate to which the binder material is affixed. More particularly, but not exclusively, this invention concerns methods of production of polyurethane and/or polyisocyanurate foam composite materials comprising porous materials, such as porous material particles. The invention also concerns such composite materials and insulation products comprising such composite materials. For example, insulation boards.

### Background of the Invention

Composite materials are sought-after in many applications, for example where there is a desire to provide a material offering a particular combination of physical properties offered by different materials. Often, composite materials comprise one material affixed to another. For example, a dispersed material may be bound in a binder (matrix) material, and/or a material may be located at least partially in cavities and/or openings provided in a substrate material. Composite materials comprising porous materials are especially sought-after, particularly where such materials can combine advantageous properties associated with high porosity (such as high thermal and/or sound insulation) with properties that are often hard to achieve for porous materials (such as high strength and/or toughness). It will be appreciated that a porous material may be provided as a dispersion in a matrix of binder material, and/or provided as a substrate in which a binder material is accommodated.

Polymeric materials are often used as binder materials, and polymeric foam materials may be especially useful in various applications. Polymeric foam materials are widely used for production of various products, including insulation products, for example. Also known as cellular polymers and expanded polymers, such materials are typically low weight and can offer high levels of thermal insulation, often combined with relatively high strength.

Polyurethane (PU) and polyisocyanurate (PIR) foams are widely used in insulation products, usually in the form of rigid panels and, in the case of polyurethane, as a spray-on foam covering. Modern PU and/or PIR foams can offer thermal conductivity (TC) values of about 22 mW/mK. PU and/or PIR polymers are typically formed by reaction of diisocyanate and polyol precursors, often in the presence of a catalyst.

Production of polymeric foam materials is generally reliant on in situ gas production to generate the characteristic cellular structure. Foams can be open-cell or closed-cell, depending on the cellular structure. Closed cell foams comprise discrete gas pockets distributed through the material, and typically offer higher impermeability to fluids and greater strength, while also having a higher density. Open cell foams comprise interconnected (broken) cells, typically providing a lower density material that can allow fluid permeation. Reticulated foams are an especially porous form of open cell foam, having a net-like structure. In a typical polymeric foam production process, gas-filled cells are formed in situ during polymerisation by the use of blowing agents, for example by generation of gas-filled cells in a liquid reaction mixture of monomers which polymerise to form the foam. Typically, cells are formed using blowing agents, generally classified as physical or chemical blowing agents. Physical blowing agents do not chemically react with and/or participate in chemical bonding with other components of a reaction mixture, and typically take the form of volatile compounds (such as solvents) that evaporate to generate gas in situ at relatively low temperatures. Low-boiling alkanes such as pentane, and fluoro-/chloro-carbons are often used as physical blowing agents. For example, physical blowing agents may be a compound of sufficiently low boiling point to evaporate at the polymerisation reaction temperature. Such physical blowing agents are particularly well suited to exothermic polymerisation reactions, such as PU and PIR polymerisation reactions. In another form of physical blowing, one or more inert gasses (i.e. gasses that do not react with components of the reaction mixture under reaction conditions) are bubbled through the reaction mixture. Chemical blowing agents generate gas by a chemical reaction, such as thermal degradation and/or reaction with another compound present in the reaction mixture. For example, in production of PU and/or PIR foams, water can be used as a chemical blowing agent. Water will react with isocyanate groups on PU and/or PIR monomers to produce an unstable carbamic acid which rapidly decomposes to produce a free amine and CO₂. The free amine may then continue to react to form a urea linkage with further isocyanate groups. Careful control of reaction compositions (e.g. reactant ratios and amounts of blowing agents) and conditions (e.g. temperature and pressure) is often required to provide foam-containing materials with the necessary combination of properties, including cell structure, rigidity and porosity.

There is continued demand for composite material products incorporating porous materials that maintain the structure and/or porosity of the porous material. In particular, there is a need for composite material products in which the pores of porous material components are kept open, i.e. the pores remain gas-filled rather than being partially or entirely filled with other components of the composite material. Porous material composites often find use in applications demanding a combination of properties (such as weight, rigidity, strength, and thermal, chemical and/or fire resistance). For example, there is a continued demand for insulation materials offering lower values of thermal conductivity. Aerogels, such as silica aerogels, are ultra-porous, lightweight materials that have good thermal insulation properties (often super-insulating properties) and have also found use in insulation materials, particularly thermal insulation materials used in the construction industry. Silica aerogels also find application as fire stopping materials and for the prevention of thermal runaway propagation, such as in electric vehicle battery packs, and in home appliance thermal insulation. Aerogels can be obtained from a variety of materials, including silica, organic polymers, carbon, metal oxides and natural macromolecules. Various attempts have been made at incorporating aerogels into polymeric foams, often with the intention of improving insulative properties of the foam.

US7781492 (The United States of America as represented by the Administrator of the National Aeronautics and Space Administration) discloses a process for production of composite materials containing a polymer foam (particularly a polyimide foam) and an aerogel. A solid expanding foam precursor in the form of partially inflated microspheres (referred to as 'friable balloons') is doped with aerogel and then heated/cured through a twostep process to produce a closed cell material incorporating the aerogel. US2009/0029147A1 (Aspen Aerogels Inc.), EP3408085B1 (W. L. Gore & Associates, Inc., Aspen Aerogels Inc.), B. Merillas, A. Lamy-Mendes, F. Villafañe, L. Durães, M.Á. Rodríguez-Pérez, "Polyurethane foam scaffold for silica aerogels: effect of cell size on the mechanical properties and thermal insulation", Materials Today Chemistry, Volume 26, 2022, 101257, and Merillas, B., Lamy-Mendes, A., Villafañe, F., Durães, L., Rodríguez-Pérez, M.Á., "Silica-Based Aerogel Composites Reinforced with Reticulated Polyurethane Foams: Thermal and Mechanical Properties", Gels 2022, 8, 392 disclose processes in which an open cell polymeric foam is impregnated with a solution of silica gel precursors, followed by in situ gelation and optionally supercritical drying. US6136216A (Armacell LLC) discloses a process for producing a polymeric foam-aerogel composition in which a hydrophobic aerogel is mixed with an aqueous gelatin solution and agitated to form a foam prior to drying. Gu, X. et al., "Study of Aerogel-Modified Recycled Polyurethane Nanocomposites", Nanomaterials 2023, 13, 2583, discloses a study into incorporation of silica aerogels into regenerated polyurethane materials prepared from liquid polyether polyol obtained from degraded waste PU foam. The method utilises residual Si-OH bonds of silica aerogels to act as polyols within the polymerization process. By reacting an excess of isocyanate with the aerogel, a particle with -NCO terminus groups is generated that can then be utilized in the synthesis of foams.

A difficulty commonly encountered when combining porous materials with binder materials (such as polymeric foam materials) is ingress of binder material precursors (such as reactants, particularly monomers when the binder material is a polymeric material) into the pores of the porous material. Such ingress may result in a composite material having no difference in properties (e.g. no improvement in terms of insulative properties) as compared to a conventional polymeric foam (i.e. without incorporation of us material).

WO2013/000861A1 (Dow Global Technologies LLC) discloses a method for making organic foam composites containing aerogel particles in which an aerogel material is first impregnated with a physical blowing agent prior to combination with a polymeric foam reaction mixture. The physical blowing agent is in the form of a volatile liquid. Examples are disclosed in which hydrophobic aerogel particles are impregnated with HFC-245fa (1,1,1,3,3-pentafluoropropane) and then mixed with a polyether polyol and other reaction components to form a formulated polyol composition. The formulated polyol composition is combined with a polyisocyanate, thereby forming a foamed PU and/or PIR composite comprising the aerogel. While it is disclosed that evaporation of the volatile liquid within the pores of the aerogel during polymerisation at least partially prevents the organic polymer or its precursors from entering the pores, the process disclosed therein relies on impregnation of aerogel materials with volatile liquid blowing agents. Such volatile liquid blowing agents may be susceptible to loss over time at standard temperature and pressure, potentially complicating storage and handling, and/or compromising accurate control of blowing agent concentration in the reaction mixture. Furthermore, the amount of liquid blowing agent used for impregnation may be significant, both in terms of the volume of solution required to immerse the aerogel and in terms of the loading in impregnated aerogel materials.

There remains a need for an efficient and cost-efficient method of incorporating porous materials into polymeric foams, and in particular for a method of producing polymeric foam-porous material composite materials offering improved properties (such as improved insulation properties).

### Summary of the Invention

According to a first aspect, the present invention provides a process for making a composite material (e.g. a composite foam) comprising a porous material (e.g. aerogel particles) affixed to a binder material (such as a polymeric material). Optionally, the process comprises providing porous material impregnated with a chemical gassing agent so that at least a portion of the chemical gassing agent is located in pores of the porous material, for example wherein the process comprises impregnating porous material with the chemical gassing agent. Optionally, a portion of the chemical gassing agent is located on an outer surface of the porous material, for example in addition to a portion of the chemical gassing agent being located in pores of the porous material. Optionally, the process comprises providing a precursor mixture comprising the impregnated porous material and precursor material for the binder material, for example wherein the process comprises combining the impregnated porous material with the precursor material to form a fluid mixture. Optionally, the process comprises forming the composite material from the reaction mixture by transforming the precursor material into the binder material and reacting the chemical gassing agent to release a gas (such as a propellant gas), preferably simultaneously. Optionally, the binder material is a polymeric material, such as a polymeric material. When the binder material is a polymeric material, the precursor material preferably comprises (or consists of) monomers for the polymeric material, and/or the step of transforming the precursor material into the binder material comprises polymerising the monomers to form the polymeric material (preferably simultaneously with reacting the chemical gassing agent to release gas). Thus, the chemical gassing agent may for example be reacted alongside monomer components of the reaction mixture. Such methods may allow formation of a polymeric superstructure with pores protected from ingression by reaction mixture components and/or products.

The process of the first aspect of the invention has been found to provide a particularly efficient and effective route to sought-after composite materials. In particular, it has been found that the process reliably produces composite materials offering an advantageous combination of the properties of the porous material and the binder material. For example, incorporation of aerogel particles into polymeric foam by the process of the present invention may offer polymeric foam products with improved thermal, sound and vibrational insulation as compared to a corresponding polymeric foam not including porous material. Without wishing to be bound by theory, it is believed that impregnation of chemical gassing agent into pores of a porous material prior to mixing with liquid/solution binder precursor material and forming a composite material can prevent ingress of precursor mixture components into the pores, and thus maintain the gas-filled cellular structure of the porous material. Yet further, it is believed that impregnation of chemical gassing agent into porous material pores can provide improvements in the stability of the impregnated porous material and/or control of the foam-forming step when the binder material is a foam (such as a polymeric foam). For example, it may be that the amount of chemical gassing agent impregnated into a porous material can be determined by weighing a sample of the porous material before and after impregnation, and the amount of chemical gassing agent present can be assumed to remain constant provided that the chemical gassing agent is not subjected to conditions resulting in release of a gas (such as a propellant gas). Thus, the amount of gassing agent made available during the composite-forming step can be accurately controlled, and it may be possible to store impregnated porous material for an extended period so that the process of the invention does not need to be performed as soon as impregnated porous material is produced. Furthermore, chemical gassing agents, for example in comparison to physical gassing agents, can be tailored to better control release of gas, for example through selection of a chemical gassing agent having a thermal stability and/or reactivity best suited to a given composite forming process. The present invention also allows composite material producers to utilise gassing agents that release only non-harmful, non-toxic and/or non-flammable gasses, for example during storage, handling and/or use. Yet further, it is believed that impregnation of porous material with chemical gassing agent can simplify handling of the porous material, for example by adding mass and thus increasing density of the porous material (thus helping to avoid loss of porous material to the air during handling) without permanently compromising porosity (e.g. especially in the case of aerogel porous materials).

According to a second aspect, the present invention provides a process of making a porous material impregnated with a chemical gassing agent, for example wherein at least a portion of the chemical gassing agent is located in pores of the porous material. Optionally, the process comprises providing an impregnation solution comprising the chemical gassing agent dissolved in a solvent. Optionally, the method comprises contacting the porous material with the impregnation solution to form an impregnation mixture. Optionally, the method comprises removing the solvent from the impregnation solution to form the impregnated porous material.

The process of the second aspect of the invention has been found to be a particularly efficient and convenient method for impregnating chemical gassing agent into the pores of a porous material. For example, it has been found that use of a chemical gassing agent dissolved in a solution can allow for use of a relatively small amount of the chemical gassing agent, and can avoid waste of gassing agent for example because substantially all the chemical gassing agent used in the solution is impregnated and remains on the porous material when the solvent is removed. Furthermore, it is believed that the process offers improved control of dosing, for example through adjusting the concentration of gassing agent in the impregnation solution. Yet further, particularly when impregnating the porous material with a relatively low loading of chemical gassing agent, it is believed that chemical gassing agent can be distributed relatively consistently so that variation in loading is reduced (e.g. from particle to particle in the case of particulate porous materials, and/or fibre to fibre in the case of fibrous porous material).

It will be appreciated that the process of the first aspect of the invention may optionally comprise the process of the second aspect of the invention. For example, the step of providing a porous material impregnated with a chemical gassing agent of the first aspect of the invention may optionally comprise the process of making a porous material impregnated with a chemical gassing agent according to the second aspect of the invention.

According to a third aspect, the present invention provides a porous material impregnated with a chemical gassing agent, wherein at least a portion of the chemical gassing agent is located in pores of the porous material. Optionally, the porous material is made by the process of the second aspect of the invention. Optionally, the chemical gassing agent is (i) an organic compound, and/or (ii) a solid at standard temperature and pressure. It will be understood that standard temperature and pressure is 20°C and 1 atm (101.325 kPa).

It has been found that such impregnated porous material is useful in forming composite materials, as described in relation to the first aspect of the invention. Furthermore, it has been found that such impregnated porous material can be manufactured conveniently and is especially stable allowing storage for an extended period of time, for example without significant loss in desirable product properties. In particular it has been found that solid chemical gassing agents provide impregnated porous material that is especially well suited to longer term storage, and it is believed that solid gassing agent provides particularly effective pore protection.

It will be appreciated that the process of the first aspect of the invention may optionally utilise an impregnated porous material according to the third aspect of the invention. For example the porous material impregnated with a chemical gassing agent provided in the process of the first aspect of the invention may optionally be a porous material according to the third aspect of the invention.

According to a fourth aspect, the present invention provides a polyol precursor mixture for a polyurethane (PU) and/or polyisocyanurate (PIR) composite material, such as a composite foam. Optionally, the polyol precursor mixture is a fluid composition comprising polyol monomers and a porous material impregnated with a chemical gassing agent, wherein at least a portion of the chemical gassing agent is located in pores of the porous material.

It has been found that such a polyol precursor mixture is especially useful in the preparation of composite materials, such as PU and/or PIR-containing composite materials. In particular, it has been found that the polyol precursor mixture is suitable for producing highly insulating composite materials, for example when the porous material is an aerogel. Without wishing to be bound by theory, it is believed that impregnation of a porous material with chemical gassing agents can help to reduce ingress of polyol and/or isocyanate monomers into porous material pores, thus helping to preserve porous material porosity in the composite material. Yet further, it is believed that the polyol mixture of the fourth aspect of the invention is storage stable, for example allowing such a mixture to be prepared in bulk and/or without requiring immediate use. More particularly, it is believed that the protected porous material remains storage stable when mixed with polyol to form a polyol solution, for example for up to a month. It is believed that such polyol mixtures may be particularly well suited, for example, in spray foam applications where it may be advantageous to initiate polymerisation and foaming at a location remote from a composition preparation/manufacturing facility.

It will be appreciated that the process of the first aspect of the invention may optionally utilise the polyol precursor mixture of the fourth aspect of the invention, for example, providing a reaction mixture may be a process according to the fourth aspect of the invention. It will be further appreciated that the polyol precursor mixture of the fourth aspect of the invention may comprise impregnated porous material according to the third aspect of the invention and/or as prepared according to the second aspect of the invention.

According to a fifth aspect, the present invention provides a method of making a polyol precursor mixture, for example a polyol precursor mixture according to the fourth aspect of the invention. Optionally, the method comprises combining with polyol monomers a porous material impregnated with a chemical gassing agent, wherein at least a portion of the chemical gassing agent is located in pores of the porous material. Optionally, the process further comprises mixing the polyol precursor mixture.

According to a sixth aspect, the present invention provides a composite material, for example made according to the first aspect of the invention. It will be understood that the composite material may optionally be made using an impregnated porous material made according to the second aspect of the invention and/or the impregnated porous material according to the third aspect of the invention. Additionally or alternatively, it will be appreciated that the composite material may optionally be made using the polyol precursor mixture of the fourth aspect of the invention and/or made using a polyol precursor mixture made according to the fifth aspect of the invention. It has been found that such a composite material provides a particularly advantageous combination of the properties of polymeric foam and porous material, for example combining the structural integrity and processability of the binder material (such as a polymeric material or polymeric foam material) with the thermal, sound and/or vibration insulative properties of a porous material, such as an aerogel.

According to a seventh aspect, the present invention provides an insulation product comprising a composite material (e.g. a composite foam), such as a composite material according to the sixth aspect of the invention. Optionally, the insulation product is a board, for example a laminate board comprising the composite material affixed to a backing layer and/or sandwiched between facing layers, e.g. wherein said backing and/or facing layers are formed of a different material such as a plastic and/or paper-based sheet or film (e.g. a sheet of laminating resin).

According to an eighth aspect, the present invention provides a spray foam kit comprising (i) a first vessel containing a polyol precursor mixture, and (ii) a second vessel containing an isocyanate precursor mixture. Optionally, the polyol precursor mixture is a mixture according to the fourth aspect of the invention and/or made according to the process of the fifth aspect of the invention. Optionally, the isocyanate precursor mixture is a fluid composition comprising isocyanate monomers. It has been found that such a kit provides a particularly effective and storage-stable kit for producing spray foam.

According to a ninth aspect, the present invention provides spray foam dispenser comprising the spray foam kit according to the eighth aspect of the invention. Optionally, the first vessel and the second vessel are fluidly connected to a mixing chamber and/or mixing nozzle for combining the polyol precursor mixture and the isocyanate precursor mixture. Optionally, the dispenser comprises a dispensing mechanism, for example providing controlled release of fluids from the first and/or second vessels into the mixing chamber and/or mixing nozzle.

It will of course be appreciated that features described in relation to one aspect of the present invention may be incorporated into other aspects of the present invention.

### Description of the Drawings

Embodiments of the present invention will now be described by way of example only with reference to the accompanying schematic drawings of which:
Figure 1A shows a schematic flow chart of a process according to an embodiment of the invention, the process being for making a composite foam comprising porous material particles embedded in a matrix of a polymeric material;
Figure 1B shows a schematic flow chart of another process according to an embodiment of the invention, the process being for making a composite material comprising a porous material substrate and a polymeric material;
Figure 2 shows a schematic flow chart of another process of an embodiment according to the invention, the process being for making a porous material impregnated with a chemical gassing agent;
Figure 3 shows a schematic flowchart of another process of an embodiment of the invention, the process being for making a composite foam comprising porous material particles embedded in a matrix of a polyurethane (PU)/polyisocyanurate (PIR) polymeric material;
Figure 4 shows a schematic flowchart of another process of an embodiment of the invention, the process being for making a polyol precursor mixture;
Figure 5 shows a schematic drawing of an embodiment of a spray foam dispenser 500 according to the invention;
Figure 6 shows a graph comparing thermal conductivity of various samples of material; and,
Figure 7 shows a graph comparing thermal conductivity of some samples of composite foam material and pure silica aerogels.

### Detailed Description

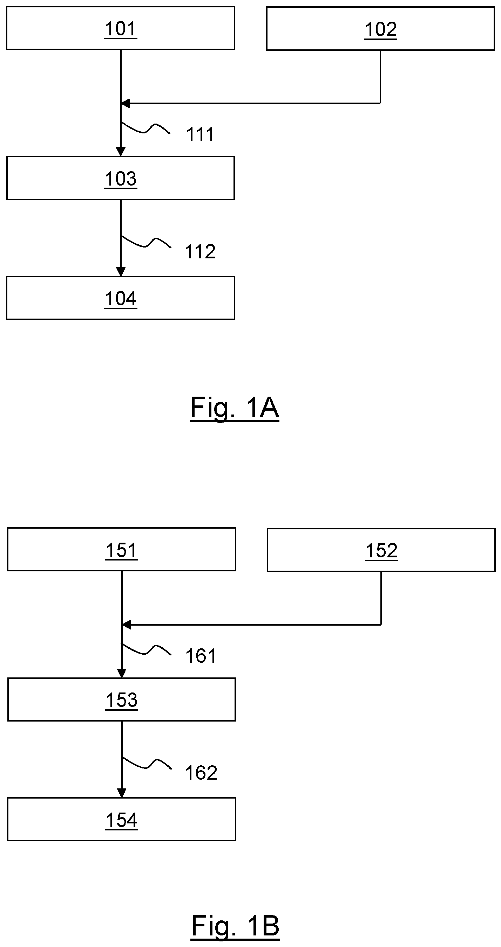

Figure 1A shows a schematic flow chart of a process according to an embodiment of the invention, the process being for making a composite foam comprising porous material particles or fibres (e.g. aerogel particles) embedded in a matrix of a polymeric binder material. It will be appreciated that such a process is applicable also to composite materials with other binder materials provided in the form of a liquid and/or solution. The process comprises combining monomers for the polymeric material 101 with particles of porous material impregnated with a chemical gassing agent 102 with stirring 111 to provide a stirred precursor mixture 103. The precursor mixture 103 is allowed to stand and the composite foam 104 formed 112 by polymerisation of the monomers to form the polymeric material and reacting the chemical gassing agent to release a gas. In this embodiment, the chemical gassing agent also acts as a chemical blowing agent for the polymeric foam, with additional chemical blowing agent optionally added to the precursor mixture. Polymerisation of the monomers (precursors for the binder material) transforms them into the binder material. Polymerisation of the monomers and reaction of the chemical gassing agent is initiated in any suitable manner, for example by control of reaction conditions (e.g. heating, exposure to UV radiation etc.) or addition of reagents (e.g. co-monomer, catalyst etc.). Optionally, reaction of the chemical gassing agent is initiated by allowing the temperature of the reaction mixture 103 to rise through heat generated by polymerisation of the monomers.

Figure 1B shows a schematic flow chart of another process according to an embodiment of the invention, the process being for making a composite material comprising a porous material substrate and a polymeric binder material. It will be appreciated that such a process is applicable also to composite materials with other binder materials provided in the form of a liquid and/or solution. The process comprises combining monomers for the polymeric material 151 with the porous material substrate impregnated with a chemical gassing agent 152. It will be appreciated that any suitable method of combining the monomers and substrate may be used - in the process of Figure 1B, the monomer composition is poured 161 into a container holding the impregnated porous material substrate to provide a precursor mixture 153. The precursor mixture 153 is allowed to stand and the composite material 154 formed 162 by polymerisation of the monomers to form the polymeric material and reacting the chemical gassing agent to release a gas. In this embodiment, the chemical gassing agent also acts as a chemical blowing agent for the polymeric foam, with additional chemical blowing agent optionally added to the precursor mixture. Polymerisation of the monomers (precursors for the binder material) transforms them into the binder material. Polymerisation of the monomers and reaction of the chemical gassing agent is initiated in any suitable manner, for example by control of reaction conditions (e.g. heating, exposure to UV radiation etc.) or addition of reagents (e.g. co-monomer, catalyst etc.). Optionally, reaction of the chemical gassing agent is initiated by allowing the temperature of the precursor mixture 153 to rise through heat generated by polymerisation of the monomers.

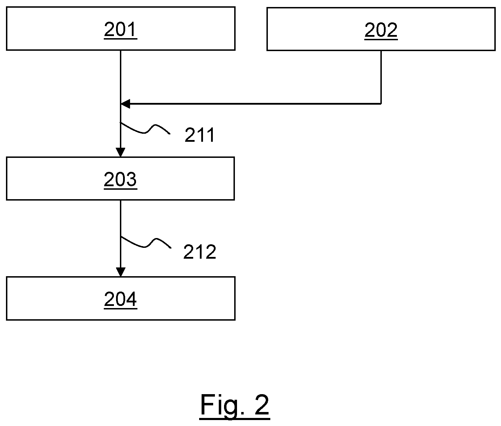

Figure 2 shows a schematic flow chart of another process of an embodiment according to the invention, the process being for making porous material (e.g. aerogel particles) impregnated with a chemical gassing agent. The process comprises combining the porous material 201 with an impregnation solution 202 comprising chemical gassing agent dissolved in a solvent with stirring 211 to form an impregnation mixture 203. The process further comprises removing 212 the solvent to form the impregnated porous material 204. Optionally, the solvent is removed 212 under reduced pressure, thereby leaving the chemical gassing agent as a residue at least partially coating the surface and pores of the porous material.

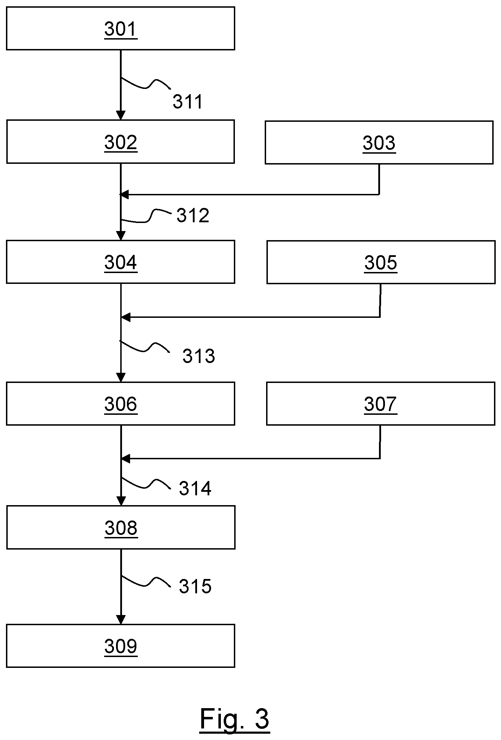

Figure 3 shows a schematic flowchart of another process of an embodiment of the invention, the process being for making a composite foam comprising porous material particles or fibres (e.g. aerogel particles) embedded in a matrix of a polyurethane (PU)/polyisocyanurate (PIR) polymeric material. The process comprises combining polyol, water, surfactant and catalyst in a solution 301 and stirring 311 to form a homogenous polyol solution 302. Porous material particles or fibres 303 impregnated with chemical gassing agent are combined with the polyol solution 302 and the combined solution stirred 312 to form a homogenous mixture 304. C3-C7 alkane physical blowing agent 305 is added to the mixture 304 with stirring 313 to form a homogenous polyol precursor mixture 306. Isocyanate 307 is added to the polyol precursor mixture 306 with rapid stirring 314 to form a reaction mixture 308. The reaction mixture 308 is transferred to a moulding vessel and allowed to stand and rise 315, thereby forming the composite foam 309.

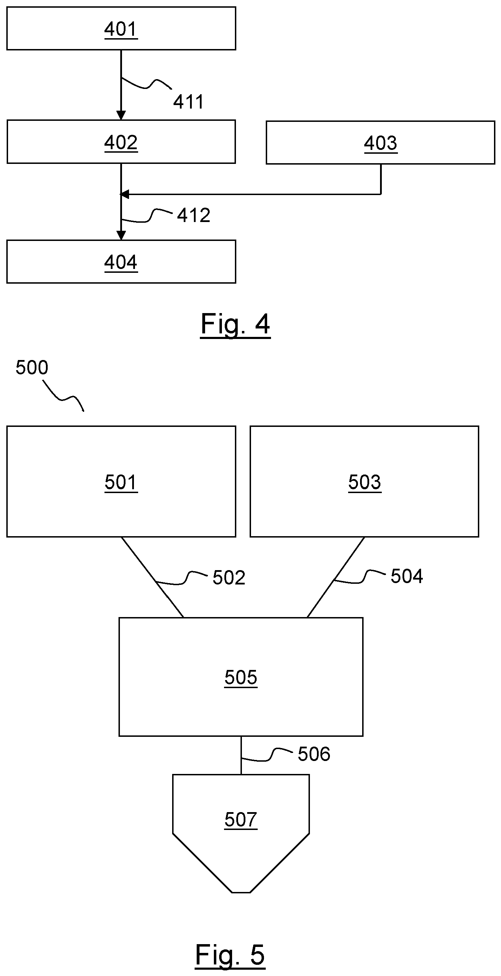

Figure 4 shows a schematic flowchart of another process of an embodiment of the invention, the process being for making a polyol precursor mixture. The process comprises combining polyol, water, surfactant, physical blowing agent and catalyst in a solution 401 and stirring 411 to form a homogenous polyol solution 402. Porous material (e.g. aerogel) particles 403 impregnated with chemical gassing agent are combined with the polyol solution 402 and the combined solution stirred 412 to form a homogenous mixture 404.

Figure 5 shows a schematic drawing of an embodiment of a spray foam dispenser 500 according to the invention. The spray foam dispenser 500 comprises a spray foam kit having a first vessel 501 containing a polyol precursor solution, e.g. according to the fourth aspect of the invention, and a second vessel 503 containing an isocyanate precursor mixture. The first vessel 501 and the second vessel 503 are fluidly connected to a mixing chamber 505 via supply lines 502 and 503, respectively. Flow of mixtures through the supply lines 502, 503 is controlled by valves (not shown in Figure 5). From the mixing chamber 505, the combined fluids spray from the dispenser via line 506 and spray nozzle 507.

It will be appreciated that various steps and reaction components referred to in the foregoing embodiments are optional.

### Composite material:

The present invention provides composite materials and processes for making composite materials. As used herein, a composite material comprises a porous material and a binder material (optionally a polymeric material, such as a polymeric foam). It will be appreciated that the porous material and the binder material may be combined in any manner. Optionally, the porous material is a single, continuous substrate. Additionally or alternatively, such a composite material may optionally comprise the porous material substrate as a matrix, or continuous, component and the binder material as a distributed, or discontinuous component. Such arrangements may be provided, for example, when a porous material substrate (such as a pre-fabricated substrate) is provided and the binder material formed on and/or in it. Optionally, the composite material comprises the binder material as a matrix, or continuous, component and the porous material as a distributed, or discontinuous component, for example wherein the composite material is a composite foam and the binder material is foamed. Such arrangements may be provided, for example, when a porous material substrate (such as a particulate or fibrous porous material) and the binder precursor material are combined in a fluid mixture prior to transformation of the binder material precursor into the binder material (e.g. polymerisation of binder material monomers into a polymer and/or a polymeric foam). Thus, it will be understood that the binder material may be formed around, on and/or in the porous material (such as in cavities shaped into the porous material for accommodating the binder material).

The porous material is affixed to the binder material. In the context of the present invention, it will be understood that such components are affixed together when they cannot be separated without damage and/or distortion of the components. For example, components may be adhered together and/or be physically interlocked.

Optionally, the composite material has a thermal conductivity (also referred to as a lambda value) of no more than about 100 mW/mK, such as no more than about 50 mW/mK, as measured after 7 days aging by means of a thermal conductivity meter (e.g. Lasercomp FOX200 or equivalent) having 20°C as the average temperature between the hot and cold plate and according to ASTM C518.

### Composite foam:

The present invention also provides composite foams and processes for making composite foams. It will be understood that a composite foam refers to a composite material in which the binder material is also porous, for example foamed. Preferably, a composite foam comprises the porous material (e.g. porous material particles or fibres, such as aerogel particles) embedded in a matrix of the binder material (such as a polymeric material). For example, it may be that the porous material is distributed substantially throughout the binder material matrix. Optionally, porous material particles and/or fibres are each encapsulated by the binder material, and/or the binder material matrix provides a unitary block of material. Optionally the binder material is a polymeric material. Such a polymeric material comprises monomer units derived from monomers of the precursor mixture used to form the composite foam (the precursor material acting, for example, as a reaction mixture). It will be appreciated that any suitable polymeric material may be used to form such a matrix. Optionally, the polymeric material comprises (or at least substantially consists of) a polyurethane (PU) and/or polyisocyanurate (PIR) polymeric material. It will be appreciated that PU and/or PIR foams typically offer low densities and high thermal, sound and/or vibration insulation properties. Optionally, the polymeric material is a flexible material. Optionally, the composite foam is a flexible composite foam (having e.g. a compressive strength of less than 50 kPa as measured according to ASTM D1621), a semi-flexible foam (e.g. having a compressive strength of about 50 to 100 kPa) or a rigid foam (e.g. having a compressive strength of above 100 kPa).

Optionally, the composite foam has a density of from about 10 to about 500 kg/m³, such as about 20 to about 100 kg/m³, for example from about 25 to about 80 kg/m³, for example when the porous material is an aerogel. Optionally, the composite foam has a thermal conductivity (also referred to as a lambda value) of no more than about 35 mW/mK, such as no more than about 25 mW/mK, for example no more than about 22 mW/mK, for example when the porous material is an aerogel, as measured after 7 days aging by means of a thermal conductivity meter (e.g. Lasercomp FOX200 or equivalent) having 20°C as the average temperature between the hot and cold plate. Unless otherwise stated, thermal conductivity measurements of the foam are conducted according to ASTM C518.

### Porous material:

It will be understood that the following comments describe the porous material (and porous material particles and fibres) without impregnation of the chemical gassing agent. In other words, the composition and/or physical properties of the porous material generally refer to the porous material prior to impregnation with chemical gassing agent.

It will be understood that a "porous material " is a porous solid, for example having a density of from about 10 to 1000 kg/m³ (for example, from about 30 to about 300 kg/m³), a porosity of at least about 50% (for example, at least about 85%), and/or a surface area (*S*_{BET}) of from about 1 to 10000 m³/g (for example from about 400 to 1200 m²/g). The porous material is composed of a solid material which (1) is not soluble in the chemical gassing agent or binder precursor (such as binder monomers when the binder material is a polymeric material) of the precursor mixture, and (2) which does not melt or thermally degrade under the conditions of the step of forming the composite material. Optionally, the porous material is not reactive with the chemical gassing agent and/or binder precursor.

Optionally, the porous material is a polymeric material (e.g. another, additional, polymeric material when the binder material is a polymeric material), such as a pre-formed additional polymeric foam material. Optionally, the additional polymeric material is a polymer nanofoam. It will be appreciated that the polymeric material may be the same or a different type of polymeric material as the binder material when the binder material is a polymeric material. For example, both the binder material and the porous material may comprise a polyurethane and/or polyisocyanurate material.

Optionally, the porous material (such as the pre-formed additional polymeric foam material) differs from the binder material in terms of one or more physical properties, for example wherein the materials have bulk physical properties that are measurably distinct. Additionally or alternatively, the porous material and the binder material differ in terms of one of more of the following properties: cellular structure (optionally wherein one of the binder material and the porous material is an open cell material and the other is a closed cell material), compressive strength, impact resistance, tensile strength, softness, density, thermal conductivity, thermal resistance, and/or fire resistance.

Optionally, the porous material is an aerogel. Optionally, the porous material comprises one or more of: artificial and/or natural rock, clay or soil material; cementitious material; artificial and/or natural bone material; ceramic material; zeolite and/or metal organic framework material; graphene; and/or activated carbon. Optionally, the porous material is a slow-release carrier substrate, such as a slow-release medicine carrier substrate. Optionally, the slow-release carrier is a pad or tablet, optionally loaded with or suitable for loading with medication intended for slow release.

Optionally the porous material is a thermally insulating porous material, such as a super-insulating porous material. As used herein, a thermally insulating porous material is a porous material having a thermal conductivity of no more than 40 mW/mK, as measured according to the method described herein. Optionally, the porous material is a super-insulating porous material. It will be understood that super-insulating porous materials are a class of advanced materials characterized by extremely low thermal conductivity (less than 25 mW/mK, as measured according to the method described herein). That low thermal conductivity is believed to be due to their high porosity and nano-, micro- or meso-structured features. The porous architecture of thermally insulating porous materials is understood to reduce heat transfer by minimising conduction, convection, and sometimes radiation. Such materials usually achieve exceptional thermal performance through a combination of low-density solid matrices and air- or gas-filled pores.

Examples of suitable thermally insulating porous materials include aerogel materials (such as silica aerogels, polymer aerogels among others), polymer foams and nanofoams, fibrous materials (such as mineral and/or glass wool), porous ceramics, and metal-organic frameworks. It will be appreciated that such materials used as a porous material in the present invention are thermally insulating materials, optionally super-insulating materials. As used herein, a nanofoam is a foam (such as a polymeric foam) in which substantially all (e.g. all) pores have diameters smaller than 100 nm.

Optionally, the porous material is in the form of a particulate. Such a particulate porous material optionally has an average particle diameter of at least 1 micron, preferably at least 10 microns, up to 20 mm, more preferably up to 10 mm and still more preferably up to 5 mm. Particle sizes can be determined and/or controlled, for example, by sieving. The porous material may be granulate or powder. The particles may be substantially spherical.

### Aerogel:

It will be understood that the following comments describe an aerogel (and aerogel particles) without impregnation of the chemical gassing agent. In other words, the composition and/or physical properties of an aerogel generally refer to the aerogel prior to impregnation with chemical gassing agent.

It will be understood that an "aerogel" is a porous solid, for example having a density of from about 30 to 300 kg/m³, a porosity of at least about 85%, and/or a surface area of from about 400 to 1200 m³/g. The aerogel is composed of a solid material which (1) is not soluble in the chemical gassing agent or the binder precursor material (e.g. binder monomers when the binder is a polymeric material) of the reaction mixture, and (2) which does not melt or thermally degrade under the conditions of the step of forming the composite material. Optionally, the aerogel is not reactive with the chemical gassing agent and/or the binder precursor material. Optionally, the aerogel is an inorganic material such as silica, alumina, various carbides, carbon, and the like. Optionally, the aerogel is a hydrophobic aerogel, for example in which the surface is treated with a silicone compound or other material to impart a hydrophobic surface. Additionally or alternatively, the aerogel is optionally an organic material such as a urethane aerogel, a resorcinol-formaldehyde aerogel, a polyolefin aerogel, a melamine-formaldehyde aerogel, a phenol-furfural aerogel, a polyamide aerogel and/or a carbon aerogel. Aerogels are commonly made using a sol-gel process, in which, generally, the liquid system (sol) containing the precursor materials is converted into a gel through chemical reactions, followed by the solvent removal to obtain an aerogel material. In certain processes, solvent may be removed under supercritical conditions of temperature and pressure, while others may remove solvent under subcritical conditions; the resulting materials are often referred to as "xerogels", although are considered herein to be a type of aerogel materials, thus falling within the definition of an 'aerogel'.

Preferably, the aerogel is a silica aerogel, such as a hydrophobic silica aerogel. It will be understood that an aerogel, such as a silica aerogel and/or a hydrophobic silica aerogel, may optionally comprise functional and/or reactive groups, such as on the surface of the aerogel. Optionally, a silica aerogel may be referred to as a nanoporous silica framework, for example comprising a network of silicon and oxygen atoms linked together by
-Si-O-Si- bonds. It will be understood that a silica aerogel is a product obtained from a silica gel after drying, i.e. when solvent is removed from the gel. It will be further understood that a hydrophobic aerogel is an aerogel formulated to repel water and not absorb moisture from the air. Hydrophobicity may be provided by, for example, hydrophobic functional groups bonded to the surface of the silica framework. Examples of such hydrophobic groups include silyl groups represented by the formula -SiRR'R'' wherein at least one of R, R' and R'' are an organic group comprising at least one Si-C bond. Optionally, the silica aerogel is prepared by a sol-gel process in which a silica gel is formed in a liquid reaction mixture from silica starting materials and then solvent is removed from the gel to provide an aerogel product. Hydrophobisation (e.g silylation) is carried out prior to drying, thereby reducing or avoiding pore collapse. Optionally, the silica aerogel is a silylated silica aerogel (for example, the silica aerogel optionally comprises surface silyl functional groups derived from a silylating agent). A silylating agent is a reagent that replaces a reactive hydrogen (for example the reactive hydrogen of an alcohol, carboxylic acid, amine, amide, and sulfide) with a silyl group (-SiRR'R''). A silylating agent can be used to introduce functionality to a silica gel by replacing surface silanol groups (Si-OH) with a silyl group. Therefore, the silylating agent is a silylating agent for silanol groups. The silylating agent may be referred to as a surface modifying agent. As discussed herein, the silylating agent is preferably hydrophobic and thus functionalises the gel with hydrophobic groups by reacting with surface silanol groups. The silylating reagent may be referred to as a hydrophobising agent. Optionally, the silylating agent is apolar. Optionally, the silylating agent is hydrophobic. The silylating agent may comprise the silyl group -SiRR'R'' wherein at least one of R, R' and R'' are an organic group comprising at least one Si-C bond. Preferably, at least one of R, R' and R'' is a saturated or unsaturated alkyl, preferably a C1-C4 saturated alkyl, most preferably a C1-C2 saturated alkyl (e.g. CH₃ or CH₂CH₃); optionally, at least one of R, R' and R'' is a fluoro-substituted unsaturated alkyl, preferably a C1-C4 fluoro-substituted saturated alkyl, such as a C1-C2 fluoro-substituted saturated alkyl. R, R' and R'' may be identical or different to one another.

In embodiments, the silylating agent optionally comprises at least one of a siloxane, a silazane, an alkoxy silane, a silylhalide or mixtures thereof. In embodiments, the silylating agent optionally comprises siloxane, preferably a disiloxane. Optionally, the siloxane comprises a monosiloxane of the formula R^{a}R^{a}'R^{a}" Si-OH, wherein at least one of R^{a}, R^{a}' and R^{a}'' are a saturated or unsaturated alkyl. Preferably, each of R^{a}, R^{a}' and R^{a}" are a C1-C6 saturated alkyl. It will be understood that each of R^{a}, R^{a}' and R^{a}" may be identical or each of R^{a}, R^{a}' and R^{a}'' may be different. Examples of suitable silanol silylating agents include trimethylsilanol (TMS-OH), triethylsilanol (TES-OH) and derivatives thereof, preferably TMS-OH. Preferably, the disiloxane comprises a disiloxane of the formula R^{a}R^{a}'R^{a}" Si-O-SiR^{b}R^{b}'R^{b}'', wherein at least one of R^{a}, R^{b} , R^{a}', R^{b}', R^{a}" and R^{b}'' are a saturated or unsaturated alkyl. Preferably, each of R^{a}, R^{b}, R^{a}', R^{b}', R^{a}" and R^{b}" are a C1-C6 saturated alkyl. It will be understood that each of R^{a}, R^{b}, R^{a}', R^{b}', R^{a}'' and R^{b}" may be identical or each of R^{a}, R^{b}, R^{a}', R^{b}', R^{a}" and R^{b}" may be different. Optionally, R^{a}R^{a}'R^{a}"Si-O-SiR^{b}R^{b}'R^{b}" is symmetrical such that R^{a} is equal to R^{b}, R^{a}' is equal to R^{b}', and R^{a}" is equal to R^{b}". Examples of suitable disiloxane silylating agents include hexamethyldisiloxane (HMDSO), hexaethyldisiloxane (HEDSO), hexapropyldisiloxane (HPDSO) and derivatives thereof. Hexamethyldisiloxane is a particularly preferred silylating agent. Examples of suitable silazanes are hexamethyldisilazane (HMDZ) and derivatives thereof. Examples of silylhalides are trimethylchlorosilane (TMCS) and triethylchlorosilane (TECS). As used herein, the term alkoxysilane includes salts (e.g. alkali metal salts) of alkoxysilanes. Suitable alkoxy silanes include potassium methylsiliconate, sodium methylsiliconate, methyltrimethoxysilane (MTMS) and methyltriethoxysilane (MTES). Siloxanes and silazanes undergo acid decomposition to form an activated silylating agent. Siloxanes are especially advantageous because they often exist in equilibrium with the corresponding activated silylating agent (silanol), with silanol formation being favoured by addition of an acid. That is especially the case for HMDSO and HEDSO, in which the relatively small alkyl substituents do not inhibit hydrolysis of Si-O bonds.

Optionally, the silica aerogel particles have a tap density of from about 0.08 g/mL to 0.3 g/mL, optionally from about 0.10 to about 0.25 g/mL, most preferably from about 0.10 to about 0.15 g/mL. The tap density can be calculated from the respective mass and volume of the aerogel powders using a tap density volumeter with measurement cylinders from 100 to 250 cm³ after 50000 taps. The S_{BET} of the silica aerogel may optionally be from about 400 m²/g to about 750 m²/g, for example from about 500 m²/g to about 700 m²/g, such as between about 550 and 660 m²/g. The specific surface area (*S*_{BET}) can be assessed by nitrogen gas sorption at 77 K (3Flex Version 5.00, *Micromeritics Instrument Corp.*)*,* applying the Brunauer-Emmett-Teller (BET) theory in the relative pressure interval 0.05-0.25 of the sorption isotherm. The silica aerogel particles may have a thermal conductivity of from about 12 to about 30 mW/mK, optionally from about 13 to about 20 mW/mK, preferably from about 15 to about 18 mW/mK. Unless otherwise stated, the thermal conductivity of the (thermally insulating) porous material (e.g. silica aerogel powders) is measured in a guarded three-plate device, according to the following method in which measurements are performed with a mean temperature of 20°C. The powder is slightly compressed into the sample holder in order to remove the air layers between the silica particles to avoid distortion by the thermal conductivity of standing air. The thermal conductivity may be substantially stable over time such that the thermal conductivity decreases by no more than 5% over a period of time of at least 3 months, preferably at least 6 months. Optionally, the silica aerogel has: (i) an average pore width by nitrogen sorption analysis (d_{pore(N2)}) of from about 2 to about 70 nm, preferably about 5 to about 50 nm, and/or (ii) a pore volume by nitrogen sorption analysis (V_{pore(N2)}) of from about 2 to about 5 cm³/g, preferably about 3.5 to about 5 cm³/g. Pore volume (Vp_{ore(N2)}) and average pore size (width) (d_{pore(N2)}) may be calculated using the relations Vₚₒᵣₑ(N2) = 1/ρ - 1/ρ_{solid}, where ρ_{solid} is skeletal density (which can be assumed to be 1.8 g/cm³ for a hydrophobised silica aerogel) bulk density (ρ) is determined from sample mass (after degassing) and total volume, and d_{pore(N2)} = 4. V_{pore(N2)}/(S/m). Suitable aerogel products and methods of making aerogels are disclosed in European patent application nos. 24158227.9, 24158229.5, 24158232.9, the contents of which are incorporated herein by reference.

Optionally, the aerogel is in the form of a particulate. Such a particulate aerogel optionally has an average particle diameter of at least 1 micron, preferably at least 10 microns, up to 20 mm, more preferably up to 10 mm and still more preferably up to 5 mm. Optionally, the silica aerogel is in the form of silica aerogel particles. Aerogel particle sizes can be determined and/or controlled, for example, by sieving. The silica aerogels may be granulate or powder. The particles may be substantially spherical.

### Impregnated porous material:

Impregnated porous material (such as aerogel particles) comprises chemical gassing agent located in pores of the porous material. It will be understood that chemical gassing agent may optionally also be deposited on the (outer) surface of the porous material, for example provided that at least a portion is located in the pores. As used herein, and unless otherwise stated, the term 'pore' encompasses micropores, mesopores and macropores. It will be understood that a micropore is a pore having a diameter <2 nm, a mesopore is a pore having a diameter of 2-50 nm, and a macropore is a pore having a diameter >50 nm. In the present application, the term 'small pores' includes micropores, mesopores and macropores up to 70 nm in diameter. Optionally, the chemical gassing agent is impregnated at least in macropores, and optionally mesopores and micropores of the porous material (e.g. aerogel particles). Optionally, when the porous material is a particulate or fibrous porous material, the impregnated particles and/or fibres of porous material (e.g. aerogel particles) have a particle size of from about 10 microns to about 5 mm.

### Chemical gassing agent:

It will be understood that a chemical gassing agent is a compound that releases a gas (such as a propellant gas) via a chemical reaction, such as thermal degradation and/or reaction with one or more compounds present in a reaction mixture. When used in formation of a polymeric foam, a chemical gassing agent may, for example, be referred to as a chemical blowing agent. In contrast, physical blowing agents are volatile compounds (generally, liquid at standard temperature and pressure) which evaporate to act themselves as the gas. Optionally, the chemical gassing agent is a thermally-initiated chemical gassing agent, for example having a thermal degradation at (and above) which the agent thermally decomposes to release a gas. Additionally or alternatively, the chemical gassing agent is a chemically reactive gassing agent, for example being reactive with a reagent to form and/or release a gas. Preferably, the chemical gassing agent is non-volatile, for example not having a boiling point at or below 120°C (such as not having a boiling point at or below about 100°C, or 70°C), optionally having a boiling point of more than 120°C (such as at least 150°C). Optionally, the chemical gassing agent has a melting point of at least 40°C, such as at least 80°C. Optionally, the chemical gassing agent is an organic compound.

Optionally, when the chemical gassing agent releases gas by thermal degradation, the agent has a thermal degradation temperature at or below the temperature at which the composite material is formed, for example at or below the temperature at which monomers of the precursor mixture are polymerised during the step of forming the composite material when the binder material is a polymeric material. Optionally, the chemical gassing agent has a thermal degradation temperature of at least about 60°C, such as at least about 80°C, for example at least about 120°C. Optionally, the chemical gassing agent has a thermal degradation temperature of between about 60°C and about 250°C, such as between about 80°C and about 200°C, for example between about 120°C and about 200°C. In other words, the chemical gassing agent is optionally thermally stable at temperatures up to at least about 60°C, such as at least about 80°C, for example at least about 120°C. It has been found that such degradation temperatures provide a useful balance between stability and reactivity, and provides for effective chemical gassing for example in polymerisation reactions such as PU and/or PIR polymerisation reactions. It is also believed that thermally-initiated chemical gassing agents allow for secondary curing of the composite material, for example by re-heating the composite material above the thermal degradation temperature of the gassing agent after the step of forming the composite material (for example after allowing the composite material to cool), particularly when the composite material is a composite foam. By such a process, it may be possible to adjust dimensions and/or structural properties of the composite material, and/or ensure that all chemical gassing agent decomposes (and is thus driven out of pores of the aerogel particles). Optionally, the chemical gassing agent thermally degrades to release gas without first evaporating - in other words, the agent decomposes without reaching a boiling point. Preferably, the chemical gassing agent is a solid at standard temperature and pressure, and thermally degrades to release gas without first melting - in other words, the agent decomposes without reaching a melting point. Optionally, the chemical gassing agent is a crystalline solid at standard temperature and pressure.

Optionally, when the chemical gassing agent releases gas by reaction with a reagent, the chemical gassing agent is reactive with a reagent (such as a monomer) present in the precursor mixture. For example, when the binder material is a polymeric material comprising PU and/or PIR, the chemical gassing agent is optionally reactive with isocyanate monomers. Such a gassing agent has been found to be particularly useful in making PU and/or PIR-based composite foam materials.

Optionally, the chemical gassing agent is capable of releasing a gas by thermal degradation (e.g. as described above) and by reaction with a reagent (e.g. as described above). It is believed that such 'dual function' gassing agents are particularly effective.

Optionally, the gas (e.g. propellant gas) released by the chemical gassing agent is non-toxic, non-flammable and/or non-harmful to human health (e.g. if inhaled). For example, the gas is CO₂. Optionally, the chemical gassing agent degrades and/or reacts to form by-products that are chemically inert (i.e. not reactive with the composite material) and/or are volatile (e.g. having a boiling point no more than 100°C, e.g. no more than 80°C. Additionally or alternatively, the chemical gassing agent forms by-products that are low-toxicity or non-toxic, low-flammability or non-flammable and/or low-harm or non-harmful to human health (e.g. if inhaled), for example CO₂. It has been found that such chemical gassing agents can avoid unwanted residual compounds remaining in the composite foam, and/or generation of undesirable contaminants/pollutants.

Optionally, the chemical gassing agent is present in the impregnated porous material (e.g. aerogel particles) in an amount of from about 0.5 wt% to about 50 wt%, such as about 1 wt% to about 30 wt%, for example from about 5 wt% to about 25 wt%, based on the weight of the porous material prior to impregnation. It is believed that such chemical gassing agent contents provide a particularly effective balance between pore protection and controlled (e.g. low) dosing of gassing agent in the reaction mixture.

Optionally, the chemical gassing agent is a compound that releases nitrogen, ammonia and/or carbon dioxide, preferably nitrogen and/or carbon dioxide, as the gas. Examples of suitable chemical gassing agents include azobisisobutyronitrile (which reacts to release nitrogen gas), acyl azides (which react to release nitrogen gas), 3,4,5-trihydroxybenzoic acid (which reacts to release carbon dioxide), 3-oxopentanoic acid (which reacts to release carbon dioxide), dimethyl propane dioic acid (which reacts to release carbon dioxide), cyclohexanedicarboxylic acid (which reacts to release carbon dioxide), 2,5-dioxocyclohexane-1,4-dicarboxylic acid (which reacts to release carbon dioxide), and metal carbonates, (such as Na₂CO₃) (which react to release carbon dioxide).

Optionally, the chemical gassing agent comprises a geminal diacid and/or a beta-keto acid. Such compounds, having a 1,3 relationship between neighbouring carboxylic acid groups, or neighbouring carboxylic acid and ketone groups, are generally susceptible to thermal degradation to release carbon dioxide gas. Furthermore, such compounds, having carboxylic acid groups, are generally reactive with isocyanate monomers, which reaction also results in release of carbon dioxide gas. Yet further, geminal diacids are capable of release of two equivalents of carbon dioxide, since a first carboxylic acid group may thermally decompose and/or react with an isocyanate monomer, producing a carboxylic acid-containing byproduct. The byproduct produced by thermal degradation may further react with an isocyanate monomer, whereas the byproduct produced by initial reaction with isocyanate may thermally decompose and/or react with another isocyanate monomer. Yet further, it is believed that geminal diacids may be more reactive with isocyanate monomers than other diacids with longer carbon chains between the carboxylic acid groups.

Optionally, the chemical gassing agent comprises a geminal diacid such as 3-oxobutanoic acid (also known as malonic acid). It will be understood that geminal diacids have the general formula: (COOH)CR₂(COOH), wherein each R is independently hydrogen or a substituted or unsubstituted alkyl group, for example wherein each R is independently hydrogen or a C1-C3 alkyl group. Malonic acid is an especially useful gassing agent for a number of reasons: it is solid at standard temperature and pressure, it is reactive with isocyanate monomers to release carbon dioxide gas, it is susceptible to thermal degradation at a temperature of about 135°C to release carbon dioxide gas, and such gassing reactions produce acetic acid which is non-toxic, volatile and also reactive with isocyanate monomers to release further carbon dioxide gas. It is believed that chemical gassing reactions of malonic acid proceed by various routes, for example when used in a precursor mixture with isocyanate monomers.

For example, thermal decomposition followed by reaction with an isocyanate monomer may proceed as follows:

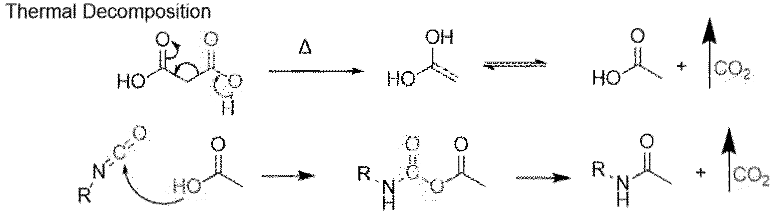

Reaction first with an isocyanate monomer may be followed by thermal decomposition or reaction with another isocyanate monomer:

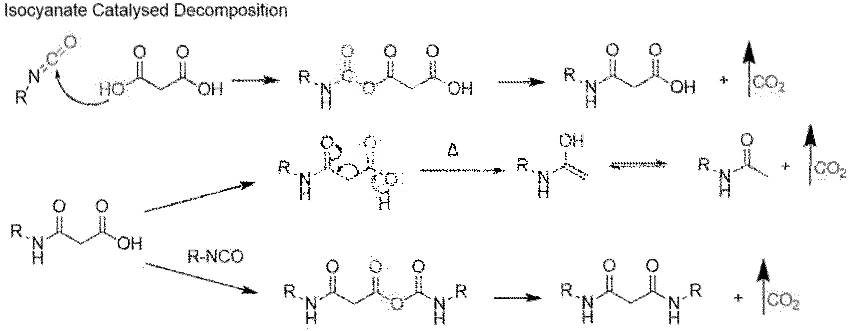

Optionally, the chemical gassing agent is a beta-keto gassing agent. It will be understood that beta-keto compounds have the general formula: (COOH)CR₂C(O)R', wherein each R is independently hydrogen or a substituted or unsubstituted alkyl group, and R' is a substituted or unsubstituted alkyl group. For example, each R is independently hydrogen or a C1-C3 alkyl group, and/or R' is a substituted or unsubstituted C1-C6 alkyl group (optionally a C1-C6 alkyl group optionally comprising a carboxylic acid substituent group). Optionally, the beta-keto chemical gassing agent is one or more of acetonedicarboxylic acid, 2,2-dimethyl-3-oxobutanoic acid, 4-methyl-3-oxopentanoic acid, and cyclohexanone-2-carboxylic acid.

Optionally, when the binder material is a PU and/or PIR material, and/or the precursor mixture from which the composite foam is made comprises isocyanate monomers, the chemical gassing agent is a carboxylic acid gassing agent, such as a gassing agent comprising at least two carboxylic acid groups. It will be understood that carboxylic acid has the general formula: RCOOH, wherein R is a substituted or unsubstituted alkyl group, for example R is a substituted or unsubstituted C1-C6 alkyl group. It will be understood that a chemical gassing agent having at least two carboxylic acid functional groups may have the general formula: (COOH)R(COOH), wherein R is a substituted or unsubstituted alkyl group, for example wherein R is a substituted or unsubstituted C1-C6 alkyl group. Additionally or alternatively, the gassing agent is a C2 to C10 organic molecule comprising a carboxylic acid functional group.

Optionally, the chemical gassing agent forms only volatile by-products by its gassing reaction, such as by-products having a boiling point of no more than 120°C, such as no more than 80°C. It has been found that such chemical gassing agents advantageously do not leave residual material in pores of the porous material.

### Binder material (e.g. polymeric binder material):

In the process of the present invention, the binder material is formed *in situ* from a binder precursor material. Optionally, the binder precursor material is provided as a liquid, or as a solution, preferably a liquid. It will be understood that the binder precursor material may be dissolved and/or suspended in a carrier liquid, for example, when provided as a solution. Optionally, the precursor binder material comprises molecules and/or particles having a size smaller than pores of the porous material. It will be appreciated that such binder materials have a tendency to enter and/or block pores of the porous material when the precursor mixture is prepared. Thus, the chemical gassing agent pre-impregnated into the pores of the porous material protects the pores from ingress of precursor binder material.

Optionally, the binder material is a polymeric binder material, optionally wherein the binder precursor material comprises (or consists of) monomers for the polymeric binder material. Optionally, the binder material is a polymeric foam. Optionally, the step of transforming binder precursor material into the binder material comprises polymerising and foaming to form a polymeric foam binder material.

It will be understood that any suitable polymeric material may be used to form binder material and/or the porous material (when the thermally insulating porous material is another polymeric material). Examples of suitable polymeric materials include polyurethane, polyisocyanurate, polystyrene, polyethene, polyimide, and/or phenolic materials, preferably polyurethane, polyisocyanurate.

Optionally, the binder precursor material is cured, solidified or otherwise reacted to transform into the binder material.

### Polyurethane and/or polyisocyanurate composite materials (e.g. composite foams):

Optionally, the binder material is a PU and/or PIR-containing materials are among the composite materials (e.g. composite foams) that can be produced in accordance with this invention. Typical polymer precursors used to produce polyurethane foams include at least one organic polyisocyanate with at least one isocyanate-reactive material that has two or more isocyanate-reactive groups. It will be understood that although a polyisocyanurate foam can be made by polymerising only a polyisocyanate compound, an isocyanate-reactive material having two or more isocyanate-reactive groups is generally also used. It will be understood that a "polyurethane" (PU) polymeric material may be made by reacting a polyisocyanate with an isocyanate-reactive material at an isocyanate index of 150 or less - such a material will contain urethane and/or urea groups, and may contain other groups formed by reaction of an isocyanate group, such as biuret, allophanate or even a small amount of isocyanurate groups. It will be understood that a "polyisocyanurate" polymeric material may be made by polymerizing only a polyisocyanate or by reacting a polyisocyanate with an isocyanate-reactive material at an isocyanate index of 150 or greater - such a material will contain isocyanurate groups (which result from a trimerization reaction of isocyanate-containing compounds) and most typically will contain urethane and/or urea groups. PIR materials may also contain other groups such as biuret or allophanate that are formed by reaction of an isocyanate group, and are often produced in the presence of an isocyanate trimerization catalyst that promotes the trimerization reaction that forms isocyanurate groups. Isocyanate index is 100 times the ratio of isocyanate groups to isocyanate-reactive groups in the foam formulation; the amount of isocyanate-reactive groups includes those contributed by isocyanate-reactive gassing agents such as water.

PU and/or PIR polymerisation reactions are generally exothermic, which may provide heat for thermal degradation of the chemical gassing agent. Nevertheless, it will be appreciated that heat may also be applied to promote such thermal degradation.

Optionally, the monomers of the precursor mixture from which the composite foam is made comprise isocyanate monomers (e.g. polyisocyanate monomers) and optionally isocyanate-reactive material having two or more isocyanate-reactive groups (such a polyol monomers). Monomer systems suitable for making PU and/or PIR polymeric material are well-known.

Optionally, isocyanate monomers comprise monomeric and/or polymeric compounds of: methylene diphenyl diisocyanate, polymethylene polyphenylene polyisocyanate, toluene diisocyanate, isophorone diisocyanate, lysine triisocyanate, methyl ester lysine diisocyanate, and/or methylenebis(cyclohexyl isocyanate). Additionally or alternatively, suitable polyisocyanates include aromatic, cycloaliphatic and aliphatic isocyanates. Exemplary organic polyisocyanates include m-phenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotolylene diisocyanate, naphthylene-1,5-diisocyanate, 1,3- and/or 1,4-bis(isocyanatomethyl)cyclohexane (including cis- and/or trans isomers) methoxyphenyl-2,4-diisocyanate, diphenylmethane-4,4'-diisocyanate, diphenylmethane-2,4' -diisocyanate, hydrogenated diphenylmethane-4,4'-diisocyanate, hydrogenated diphenylmethane-2,4'-diisocyanate, 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, 4,4',4"-triphenyl methane triisocyanate, a polymethylene polyphenylisocyanate (PMDI), toluene-2,4,6-triisocyanate and 4,4'-dimethyldiphenylmethane-2,2',5,5'-tetraisocyanate. Preferably the polyisocyanate is diphenylmethane-4,4'-diisocyanate, diphenylmethane-2,4'-diisocyanate, PMDI, toluene-2,4-diisocyanate, toluene-2,6-diisocyanate or mixtures thereof. Diphenylmethane-4,4'-diisocyanate, diphenylmethane-2,4'-diisocyanate and mixtures thereof are generically referred to as MDI, and all can be used. Toluene-2,4-diisocyanate, toluene-2,6-diisocyanate and mixtures thereof are generically referred to as TDI, and all can be used.

Isocyanate-reactive materials that are useful in preparing PU and/or PIR foams are organic compounds that have at least one and preferably at least two isocyanate-reactive groups per molecule. The isocyanate groups may be, for example, hydroxyl groups, primary or secondary amino groups, thiol groups, carboxylic acid groups and the like. Among these, aliphatic hydroxyl groups and aliphatic or aromatic primary or secondary amino groups are preferred. The isocyanate-reactive materials may contain up to 8 or more isocyanate-reactive groups/molecule. Preferred types of isocyanate-reactive materials include polyether polyols, polyester polyols, and various types of polyols that are prepared from vegetable oils or animal fats. Polyether polyols include, for example, polymers of propylene oxide, ethylene oxide, 1,2-butylene oxide, tetramethylene oxide, block and/or random copolymers thereof, and the like. Optionally, polyol monomers present in the reaction mixture used to form the composite foam comprise polyester polyols, aromatic polyester polyols, polyether polyols, polyethylene glycols, and/or vegetable oils (such as castor oil and/or cashew oil). Useful isocyanate-reactive materials include, for example, compounds having exactly two hydroxyl groups per molecule and a hydroxyl equivalent weight of up to 125, such as, for example, 1,2-ethylene glycol, diethylene glycol, triethylene glycol, 1,2-propylene glycol, dipropylene glycol, tripropylene glycol, 1,4-butane diol, 1,6-hexane diol, cyclohexanedimethanol and the like, as well as alkoxylates of any of the foregoing that have hydroxyl equivalent weights of up to 125. Other useful isocyanate-reactive materials include compounds having 3 or more hydroxyl groups per molecule and a hydroxyl equivalent weight of up to 125, including, for example, glycerin, trimethylolethane, trimethylolpropane, pentaerythritol, erythritol, sorbitol, sucrose, triethanolamine, and the like as well as alkoxylates of any of the foregoing that have hydroxyl equivalent weights of up to 125. Still other suitable isocyanate-reactive materials include materials containing from 2 to 8, especially from 2 to 6, primary amine or secondary amine groups per molecule. These include amine-terminated polyethers that may have equivalent weights of up to about 4000 per primary or secondary amino group, and various amine compounds that have an equivalent weight of from 30 to about 200, especially from 50 to 125, per primary or secondary amino group. Examples of the latter materials include ethylene diamine, phenylene diamine, bis(3-chloro-4-aminophenyl)methane and 2,4-diamino-3,5-diethyl toluene. Amino alcohols such as diethanol amine, monoethanol amine, triethanol amine, mono- or di-(isopropanol) amine, and the like are also useful isocyanate-reactive materials. Amine-initiated polyols such as alkoxylates of ammonia, ethylene diamine, phenylene diamine, methylene bis(aniline) and the like are also useful isocyanate-reactive materials.

It will be understood that, depending on the nature of the chemical gassing agent, unreacted gassing agent and/or by-products of the gassing reaction(s) may remain in the composite foam, for example entrapped within pores of the aerogel.

### Producing a composite material

Optionally, the process of making the composite material comprises providing a porous material impregnated with a chemical gassing agent (wherein at least a portion of the chemical gassing agent is located in pores of the porous material), providing a precursor mixture comprising the impregnated porous material and a precursor binder material ( e.g. monomers for a polymeric binder material), and forming the composite material from the reaction mixture by transforming the precursor material into the binder material (e.g. polymerising the monomers to form the polymeric binder material) and reacting the chemical gassing agent to release gas.

It will be appreciated that the porous material and the binder precursor material may be combined in any suitable manner. For example, a porous material substrate and the binder precursor material may be combined together in a container, such as wherein the porous material substrate is at least partially immersed in a binder precursor composition and/or wherein a binder precursor composition is poured over and/or into the porous material substrate. Additionally or alternatively, a binder precursor composition is inserted into a cavity within a porous material substrate. It will be appreciated that in such methods, the porous material substrate may be pre-formed, for example being a pre-moulded and/or shaped substrate. It will be further understood that such a porous material cavity is distinct from the pores of the porous material.

Optionally, the composite material is produced as a composite foam.

### Producing a composite foam

Optionally, the process of making a composite foam comprises providing the porous material (e.g. in the form of particles and/or fibres of porous material, such as particles of aerogel) impregnated with a chemical gassing agent (wherein at least a portion of the chemical gassing agent is located in pores of the porous material), providing a precursor mixture comprising the impregnated porous material and binder precursor material, and forming the composite foam from the reaction mixture by transforming the precursor material into the binder material and reacting the chemical gassing agent to release gas (e.g. propellant gas). When the binder material is a polymeric material, the process may comprise polymerising binder monomers to form the polymeric binder material.

Optionally, the precursor mixture comprises from 0.5 to 50 volume percent of porous material (e.g. particles and/or fibres such as aerogel particles), for example 1 to 35 volume percent, based on the total volume of the precursor mixture. It will be understood that the precursor mixture comprises the binder precursor material for forming the binder material (such as monomers), impregnated porous material and any other components added prior to the step of forming the composite material. For example, said precursor mixture may optionally comprise polyol and isocyanate monomers, impregnated porous material particles and/or fibres, physical blowing agent(s), additional chemical blowing agent(s), catalyst(s) and/or surfactant(s).

Preferably, the precursor mixture is stirred and subsequently left to stand to allow the binder material to form (e.g. the composite foam to form). Optionally, the step of forming the composite material is carried out in a mould to provide appropriate shape and/or dimensions. Additionally or alternatively, the step of forming the composite material is carried out by an extrusion process, and/or by a spray process, such as extrusion foaming and/or spray foaming. Any suitable method of forming the composite material may be used, provided that the composite material is formed under conditions sufficient to cause thermal degradation and/or reaction of the chemical gassing agent. It will be understood that the composite material forming process may be selected in accordance with the polymer type and the particular composite material product that is being manufactured.

### Polyol precursor mixture

A polyol precursor mixture may optionally be provided when forming a composite material (e.g. a composite foam) comprising PU and/or PIR polymeric binder material. Such a polyol precursor mixture may comprise impregnated porous material (such as aerogel particles) and polyol monomers. Optionally, the polyol precursor mixture is stirred during and/or after combining impregnated porous material and polyol monomers. Preferably, the polyol precursor mixture is free from any reagent reactive with the chemical gassing agent to release gas. Optionally, the polyol mixture comprises one or more of: an additional chemical blowing agent (such as water), a physical blowing agent, one or more catalysts, a surfactant, and a flame retardant. It will be understood that impregnated porous material particles may be incorporated into a polyol precursor mixture in any suitable manner, including mixing with an additional chemical blowing agent, a physical blowing agent, one or more catalysts, a surfactant, and/or a flame retardant, and then combining such a mixture with polyol monomers. Such mixtures may comprise the impregnated porous material in any suitable amount. Additionally or alternatively, impregnated porous material may be combined with polyol monomers prior to addition of one of more additional components, such as those listed above.

A wide variety of materials are known to catalyse PU and/or PIR-forming reactions, including tertiary amines, tertiary phosphines, various metal chelates, acid metal salts, strong bases, various metal alcoholates and phenolates and metal salts of organic acids. Catalysts are typically used in small amounts, for example, each catalyst being employed from about 0.0015 to about 5% by weight of the isocyanate-reactive materials. An isocyanate trimerization catalyst is generally included when producing an isocyanurate foam. Examples of trimerization catalysts include strong bases such as alkali metal compounds, quaternary ammonium salts and aminophenol compounds.

Optionally, the polyol precursor mixture comprises an additional chemical blowing agent and/or a physical blowing agent. Suitable physical blowing agents include C4 to C7 alkanes (e.g. butane, pentane, hexane, and/or heptane, including the isomers thereof), methylformate, carbon dioxide, a hydrofluoroether, hydrogenated fluorocarbons, and chlorofluorocarbons; preferably the physical blowing agent is a C4 to C6 alkane, for example pentane (including the isomers thereof). Optionally the process further comprises combining the polyol precursor mixture with isocyanate monomers. Optionally the process comprises initially stirring the reaction mixture when the polyol precursor mixture is combined with the isocyanate monomers to homogenise the reaction mixture and subsequently allowing the reaction mixture to stand without stirring.

### Impregnation of the porous material (e.g. aerogel particles)

It will be appreciated that the porous material may be impregnated with a chemical gassing agent in any suitable manner, for example during or after production of the porous material itself.

Optionally, the porous material (such as aerogel particles) is impregnated with a chemical gassing agent by a process comprising contacting the porous material with an impregnation solution comprising the chemical gassing agent dissolved in a solvent, and removing the solvent from the impregnation solution to form the impregnated porous material. It has been found that such a process deposits chemical gassing agent in the pores of the porous material. Optionally, the impregnation solution comprises the chemical gassing agent in an amount of from about 1 mg/mL to about 1000 mg/mL, for example about 10 mg/mL to about 500 mg/mL. Optionally, the impregnation mixture is stirred (e.g. in order to homogenise the impregnation mixture) prior to removal of the solvent, for example when the porous material is a particulate and/or fibrous material. It will be understood that a mixture is considered to be homogenised when it is free flowing and/or the porous material is saturated. Optionally, the solvent is removed under reduced pressure, optionally while heating the impregnation mixture and/or stirring the impregnation mixture. Optionally, the solvent is a volatile solvent, e.g. having a boiling point of no more than 100°C, such as no more than 80°C (at standard pressure). Additionally or alternatively, e.g. when the chemical gassing agent is thermally-initiated, the solvent has a boiling point at least 20°C, such as at least 40°C, lower than the thermal degradation temperature of the gassing agent. Optionally, the solvent comprises or is a polar solvent such as a C1-C3 polar organic solvent. Optionally, the polar solvent is one or more of acetone, water, methanol, ethanol, and propanol (e.g. isopropanol), preferably the solvent is acetone, methanol, ethanol and/or propanol. Additionally or alternatively, the solvent comprises or is a non-polar solvent. Optionally, the non-polar solvent is one or more of pentane (and isomers thereof), hexane (and isomers thereof), dimethylsulfoxide (DMSO), dimethylformamide (DMF), benzene, an organosilane, and/or chloroform.

Additionally or alternatively, the porous material (e.g. an aerogel) may be impregnated during a process of producing the porous material. For example, where a process of producing the porous material comprises providing a slurry of porous material and a liquid (such as a solvent, e.g. a solvent as described hereinabove), the porous material may optionally be impregnated with a chemical gassing agent by addition of the chemical gassing agent to the slurry, optionally followed by extraction and/or drying of the porous material to provide impregnated particles. Such a process may be utilised, for example, when the porous material is an aerogel.

### Insulation products:

The composite material (e.g. composite foam) of the present invention may be used in production of suitable insulation products, such as insulation boards and/or spray insulation. It will be understood that spray insulation is a product generated by spraying the reaction mixture during a step of forming a composite material, which may result in the foam sticking to a surface that the sprayed mixture is brought into contact with during the forming step. It will also be understood that the composite material may be incorporated into insulation boards by any suitable method, for example providing a variety of laminate and non-laminate structures.

### Spray foam:

It will be understood that impregnated aerogel particles may optionally be utilised in spray foam kits and/or dispensers. Such systems are well known in the art. For example, any suitable spray foam kit and/or dispenser may utilise the polyol precursor composition of the present invention in place of a conventional polyol composition.

### Composite material products

The present invention provides various products, for example depending on the nature of the porous material. Optionally, the composite material may take the form of a layered structure, e.g. comprising one or more layers of the porous material and one or more layers of the binder material (e.g. polymeric binder material).

Optionally, when the porous material is (another) polymeric material, the composite material may provide a particularly useful combination of properties of the polymeric materials. Combining materials having different properties as described hereinabove may allow for characteristics of one polymeric material to compensate for and/or improve properties imparted by the other, particularly when both polymeric materials are polymeric foams. For example, the materials may have different hardness/softness, provide a balance of brittleness, strength, flexibility, impact resistance and/or rigidity, and/or allow for a cost-effective use of materials with different costs. Yet further, such combination of polymeric materials may offer improved thermal, chemical, UV, water and/or fire resistance, for example.

Optionally, e.g. when the porous material is artificial and/or natural rock, clay or soil material, and/or cementitious material, the process of the invention may allow for the binder material to form around the porous material, thereby ensuring a close-fitting assembly without compromising porosity of the porous material, and/or without utilising excess binder material precursor, such as monomers (e.g. which may otherwise be wasted through ingress into the pores). Additionally or alternatively, e.g. when the porous material is provided as particulate artificial and/or natural rock, clay or soil pieces, and/or cementitious material, the porous material may act as a low-cost and/or strengthening filler material.

Optionally, e.g. when the porous material is a zeolite and/or metal-organic framework, the porous material may impart beneficial sorption properties to the composite material and/or the polymeric foam may act as a filter/barrier medium offering protection to the porous material. Yet further, the binder material may for example act as a convenient carrier for catalytic porous materials, such as catalytic zeolite and/or metal-organic framework materials.

Optionally, e.g. when the porous material is one or more of graphene and activated carbon, the porous material may improve mechanical, thermal and/or electromagnetic/conductive properties of the composite material, for example providing improved quality and/or functionality. It may be that avoiding ingress of binder precursor material (e.g. monomers) into activated carbon and/or graphene material preserves beneficial properties of the activated carbon and/or graphene.

Optionally, when the porous material is artificial and/or natural bone (e.g. artificial or natural), the composite material may provide a binder structure moulded onto/around the bone material. Such a composite material may for example allow for a padded interface between bone and an artificial joint and/or limb surface. In such embodiments, the use of a non-toxic, and e.g. bio-based, chemical gassing agent (such as malonic acid) may be particularly beneficial.

Optionally, when the porous material is a ceramic material, the composite material may provide a binder structure moulded onto/around the ceramic material.

Optionally, when the porous material is a slow-release carrier substrate, for example suitable for carrying and releasing a medicinal compound, the binder material may provide a vehicle for application onto skin (e.g. human or animal skin), for example a padded plaster or bandage, and/or a cover for a bed, mattress, or chair, and/or a cover support or cast for a part of the body (e.g. human or animal body). Suitable slow-release carrier substrate materials include biocompatible materials such as microparticles and polymeric materials such as biopolymers, for example homo- and co-polymeric microparticles. In such embodiments, the use of a non-toxic, and e.g. bio-based, chemical gassing agent (such as malonic acid) may be particularly beneficial.

### Examples

### Preparation of impregnated (functionalised) aerogel:

Chemical gassing agent, e.g. malonic acid, is dissolved in a solvent, e.g. ethanol at a concentration of 0.1 g malonic acid per 5 mL ethanol. Aerogel is then added and mixed with stirring until homogeneous. The mixture is considered homogenous, for example, when all aerogel is saturated and the mixture is free flowing. The solvent is then removed under reduced pressure and the aerogel is allowed to cool to ambient temperature. Malonic acid solidifies and crystallises in pores of the aerogel, and optionally on outer surfaces of the aerogel.

### Preparation of a composite PU and/or PIR foam:

A polyol precursor mixture is prepared first. Components (polyol, water, surfactant, amine catalyst and trimerization catalyst), are weighed out and then homogenised with stirring. The mixture is considered homogenised when it is free-flowing. To this mixture, functionalised aerogel is added, with stirring until homogeneous. Maintaining stirring, a physical gassing agent, e.g. pentane, is injected and the mixture homogenised with stirring to yield the completed polyol precursor mixture (Part A of the two-component system). A predetermined mass of isocyanate monomers (Part B) is then injected into the Part A mixture, and the resulting reaction mixture is rapidly homogenised with stirring. The mixture is allowed to rise (e.g. >24 h) before demolding.

In the following examples, pphp means 'parts per hundred polyol'. Thermal Conductivity (TC) measurements are taken 7 days after foaming, unless otherwise indicated. It is believed that TC measurements taken at 7 days are indicative of stabilised TC.

**Example 1:** Components of part A (aromatic polyester polyol (16 g), water (0.2 g, 1 pphp), polyurethane surfactant (0.3 g, 2 pphp), amine catalyst (0.1 g, 0.6 pphp), trimerization catalyst (0.4 g, 2 pphp)) were weighed out into a mixing vessel and homogenized with moderate stirring. To this mixture, 0.2 g functionalized aerogel (aerogel impregnated with 0.03 g malonic acid, 15 wt% based on the weight of the aerogel prior to impregnation) is added and mixed again on low speed until homogenous. Whilst maintaining stirring, physical blowing agent (5 mL, pentane) is injected in a constant stream and homogenized to give the completed Part A of the two-component system. A predetermined mass of isocyanate monomer (18 g, Part B) is then injected into the Part A mixture and rapidly homogenized with an overhead stirrer. The reaction mixture is then poured into a nonstick vessel and allowed to rise. Once risen the material is left for >24 h before demolding. The amount of aerogel included in the Part A mixture is 0.5 wt% of the weight of the reaction mixture excluding physical blowing agent. It will be understood that the reaction mixture excluding physical blowing agent including monomers, surfactant(s) catalyst(s) and water. Result: TC = 21.85 mW/mK.

**Example 2:** Components of part A (aromatic polyester polyol (16 g), water (0.2 g), polyurethane surfactant (0.3 g), amine catalyst (0.1 g), trimerization catalyst (0.4 g)) were weighed out into a mixing vessel and homogenized with moderate stirring. To this mixture, 0.2 g of the functionalized aerogel (aerogel impregnated with 0.02 g malonic acid, 10 wt% based on the weight of the aerogel prior to impregnation) is added and mixed again on low speed until homogenous. Whilst maintaining stirring physical blowing agent (4 mL, cyclopentane) is injected in a constant stream and homogenized to give the completed Part A of the two-component system. A predetermined mass of isocyanate monomer (18 g, Part B) is then injected into the Part A mixture and rapidly homogenized with an overhead stirrer. The reaction mixture is then poured into a nonstick vessel and allowed to rise. Once risen the material is left for >24 h before demolding. The amount of aerogel included in the Part A mixture is 0.5 wt% of the weight of the reaction mixture excluding physical blowing agent. Result: TC = 20.5 mW/mK.

**Example 3:** Components of part A (aromatic polyester polyol (16 g), water (0.1 g, 0.8 pphp), polyurethane surfactant (0.3 g, 2 pphp), amine catalyst (0.1 g, 0.6 pphp), trimerization catalyst (0.4 g, 2 pphp)) were weighed out into a mixing vessel and homogenized with moderate stirring. To this mixture, 0.9 g of the functionalized aerogel (aerogel impregnated with 0.1 g malonic acid, 15 wt% based on the weight of the aerogel prior to impregnation) is added and mixed again on low speed until homogenous. Whilst maintaining stirring physical blowing agent (5 mL, pentane) is injected in a constant stream and homogenized to give the completed Part A of the two-component system. A predetermined mass of isocyanate monomer (18 g, Part B) is then injected into the Part A mixture and rapidly homogenized with an overhead stirrer. The reaction mixture is then poured into a nonstick vessel and allowed to rise. Once risen the material is left for >24 h before demolding. The amount of aerogel included in the Part A mixture is 2.3 wt% of the weight of the reaction mixture excluding physical blowing agent. Result: TC = 20.7 mW/mK.

**Example 4 (comparative):** Components of part A (aromatic polyester polyol (49 g), water (0.4 g, 0.8 pphp), polyurethane surfactant (1.0 g, 2 pphp), amine catalyst (0.3 g, 0.6 pphp), trimerization catalyst (1.1 g, 2 pphp)) were weighed out into a mixing vessel and homogenized with moderate stirring. Whilst maintaining stirring physical blowing agent (10 mL, pentane) is injected in a constant stream and homogenized to give the completed Part A of the two-component system. A predetermined mass of isocyanate monomer (54 g, Part B) is then injected into the Part A mixture and rapidly homogenized with an overhead stirrer. The reaction mixture is then poured into a nonstick vessel and allowed to rise. Once risen the material is left for >24 h before demolding. TC = 22.73 mW/mK.

**Example 5 (comparative):** Components of part A (aromatic polyester polyol (49 g), water (0.4 g, 0.9 pphp), polyurethane surfactant (1.0 g, 2 pphp), amine catalyst (0.3 g, 0.6 pphp), trimerization catalyst (1.1 g, 2 pphp), and malonic acid (0.09 g)) were weighed out into a mixing vessel and homogenized with moderate stirring. The amount of malonic acid approximately corresponds to the amount present in the Part A mixture of Example 3. Whilst maintaining stirring physical blowing agent (10 mL, pentane) is injected in a constant stream and homogenized to give the completed Part A of the two-component system. A predetermined mass of isocyanate monomer (54 g, Part B) is then injected into the Part A mixture and rapidly homogenized with an overhead stirrer. The reaction mixture is then poured into a nonstick vessel and allowed to rise. Once risen the material is left for >24 h before demolding. Result: TC = 23.00 mW/mK.

**Example 6 (comparative):** Components of part A (aromatic polyester polyol (49 g), water (0.4 g, 0.9 pphp), polyurethane surfactant (1.0 g, 2 pphp), amine catalyst (0.3 g, 0.6 pphp), trimerization catalyst (1.1 g, 2.3 pphp)), were weighed out into a mixing vessel and homogenized with moderate stirring. To this mixture, 0.6 g unfunctionalized aerogel (aerogel: 0.5 wt%, 0.6 g) is added and mixed again on low speed until homogenous. Whilst maintaining stirring physical blowing agent (10 mL, n-pentane) is injected in a constant stream and homogenized to give the completed Part A of the two-component system. Part A is then placed on a scale in its vessel and weight is tared. A predetermined mass of Isocyanate (54 g, Part B) is then injected into the Part A mixture and rapidly homogenized with an overhead stirrer. The reaction mixture is then poured into a nonstick vessel and allowed to rise. Once risen the material is left for >24 h before demolding. The amount of aerogel included in the Part A mixture is 0.5 wt% in of the weight of the reaction mixture excluding physical blowing agent. Result: TC = 22.17 mW/mK.

**Example 7:** Components of part A (aromatic polyester polyol (49 g), water (0.4 g, 0.9 pphp), polyurethane surfactant (1.0 g, 2 pphp), amine catalyst (0.3 g, 0.6 pphp), trimerization catalyst (1.1 g, 2 pphp)), were weighed out into a mixing vessel and homogenized with moderate stirring. To this mixture, 0.6 g of functionalized aerogel (aerogel impregnated with 0.03 g malonic acid, 5 wt% based on the weight of the aerogel prior to impregnation) is added and mixed again on low speed until homogenous. Whilst maintaining stirring physical blowing agent (10 mL, pentane) is injected in a constant stream and homogenized to give the completed Part A of the two-component system. A predetermined mass of isocyanate monomer (54 g, Part B) is then injected into the Part A mixture and rapidly homogenized with an overhead stirrer. The reaction mixture is then poured into a nonstick vessel and allowed to rise. Once risen the material is left for > 24 h before demolding. The amount of aerogel included in the Part A mixture is 0.5 wt% of the weight of the reaction mixture excluding physical blowing agent. Result: TC = 21.94 mW/mK

**Example 8:** Components of part A (aromatic polyester polyol (49 g), water (0.4 g, 0.9 pphp), polyurethane surfactant (1.0 g, 2 pphp), amine catalyst (0.3 g, 0.6 pphp), trimerization catalyst (1.1 g, 2 pphp)), were weighed out into a mixing vessel and homogenized with moderate stirring. To this mixture, 0.6 g of functionalized aerogel (aerogel impregnated with 0.06 g malonic acid, 10 wt% based on the weight of the aerogel prior to impregnation) is added and mixed again on low speed until homogenous. Whilst maintaining stirring physical blowing agent (10 mL, n-pentane) is injected in a constant stream and homogenized to give the completed Part A of the two-component system. A predetermined mass of isocyanate monomer (54 g, Part B) is then injected into the Part A mixture and rapidly homogenized with an overhead stirrer. The reaction mixture is then poured into a nonstick vessel and allowed to rise. Once risen the material is left for >24 h before demolding. The amount of aerogel included in the Part A mixture is 0.5 wt% of the weight of the reaction mixture excluding physical blowing agent. The aerogel used had a TC of 18.5 mW/mK prior to impregnation. Result: TC = 21.3 mW/mK.

**Example 9:** Components of part A (aromatic polyester polyol (49 g), water (0.4 g, 0.9 pphp), polyurethane surfactant (1.0 g, 2 pphp), amine catalyst (0.3 g, 0.6 pphp), trimerization catalyst (1.1 g, 2 pphp)), were weighed out into a mixing vessel and homogenized with moderate stirring. To this mixture, 0.6 g of functionalized aerogel (aerogel impregnated with 0.09 g malonic acid, 15 wt% based on the weight of the aerogel prior to impregnation) is added and mixed again on low speed until homogenous. Whilst maintaining stirring physical blowing agent (10 mL, pentane) is injected in a constant stream and homogenized to give the completed Part A of the two-component system. A predetermined mass of isocyanate monomer (54 g, Part B) is then injected into the Part A mixture and rapidly homogenized with an overhead stirrer. The reaction mixture is then poured into a nonstick vessel and allowed to rise. Once risen the material is left for >24 h before demolding. The amount of aerogel included in the Part A mixture is 0.5 wt% of the weight of the reaction mixture excluding physical blowing agent. Result: TC = 22.08 mW/mK.

**Example 10:** Components of part A (aromatic polyester polyol (49 g), water (0.4 g, 0.9 pphp), polyurethane surfactant (1.0 g, 2 pphp), amine catalyst (0.3 g, 0.6 pphp), trimerization catalyst (1.1 g, 2 pphp)), were weighed out into a mixing vessel and homogenized with moderate stirring. To this mixture, 0.6 g of functionalized aerogel (aerogel impregnated with 0.1 g malonic acid, 20 wt% based on the weight of the aerogel prior to impregnation) is added and mixed again on low speed until homogenous. Whilst maintaining stirring physical blowing agent (10 mL, pentane) is injected in a constant stream and homogenized to give the completed Part A of the two-component system. A predetermined mass of isocyanate monomer (54 g, Part B) is then injected into the Part A mixture and rapidly homogenized with an overhead stirrer. The reaction mixture is then poured into a nonstick vessel and allowed to rise. Once risen the material is left for >24 h before demolding. The amount of aerogel included in the Part A mixture is 0.5 wt% of the weight of the reaction mixture excluding physical blowing agent. Result: TC = 22.13 mW/mK.

**Example 11:** Components of part A (aromatic polyester polyol (49 g), water (0.6 g, 1.2 pphp), polyurethane surfactant (1.0 g, 2 pphp), amine catalyst (0.3 g, 0.6 pphp), trimerization catalyst (1.1 g, 2.3 pphp)), were weighed out into a mixing vessel and homogenized with moderate stirring. To this mixture, 0.6 g of functionalized aerogel (aerogel impregnated with 0.06 g malonic acid, 10wt% based on the weight of the aerogel prior to impregnation) is added and mixed again on low speed until homogenous. Whilst maintaining stirring physical blowing agent (10 mL, pentane) is injected in a constant stream and homogenized to give the completed Part A of the two-component system. A predetermined mass of isocyanate monomer (54 g, Part B) is then injected into the Part A mixture and rapidly homogenized with an overhead stirrer. The reaction mixture is then poured into a nonstick vessel and allowed to rise. Once risen the material is left for a minimum of 24 h before demolding. The amount of aerogel included in the Part A mixture is 0.5 wt% of the weight of the reaction mixture excluding physical blowing agent. The aerogel used had a TC of 16.4 mW/mK prior to impregnation. Result: TC = 21.08 mW/mK.

**Example 12:** Utilising the composite foam produced within Example 9, a toughened layer was added to the surface of the foam to form an insulation board product. GPX Premium Polyester Laminating Resin (40 g) was weighed out into a suitable beaker, to this methyl ethyl ketone peroxide (MEKP) catalyst was added (2%wt, 0.8g) and stirred to homogenise. The prepolymer mixture thus prepared was poured over the surface of the composite foam to produce a thin layer and, allowed to cure (3 days) prior to measurement. Result: TC = 22.66 mW/mK.

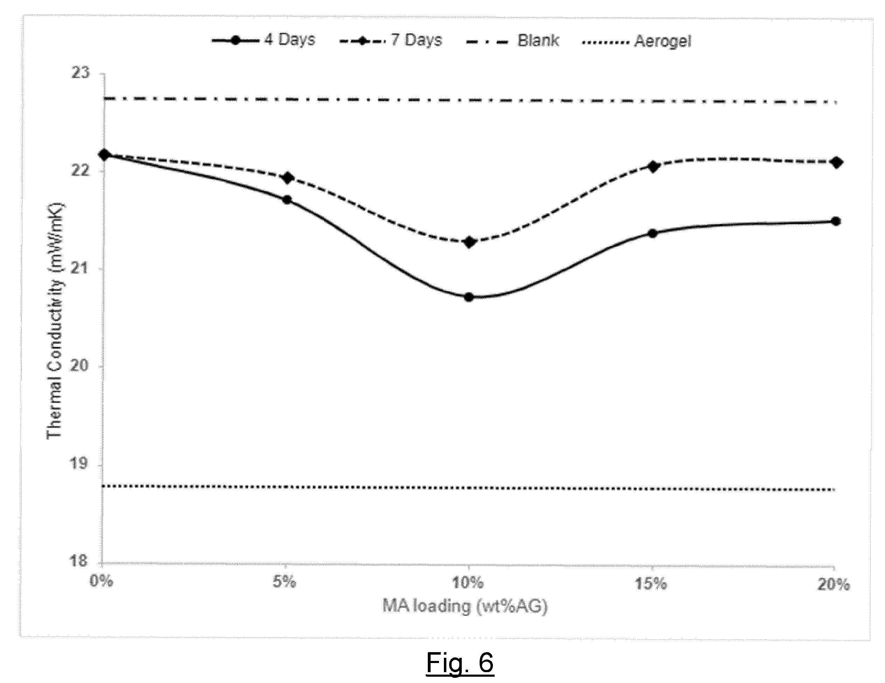

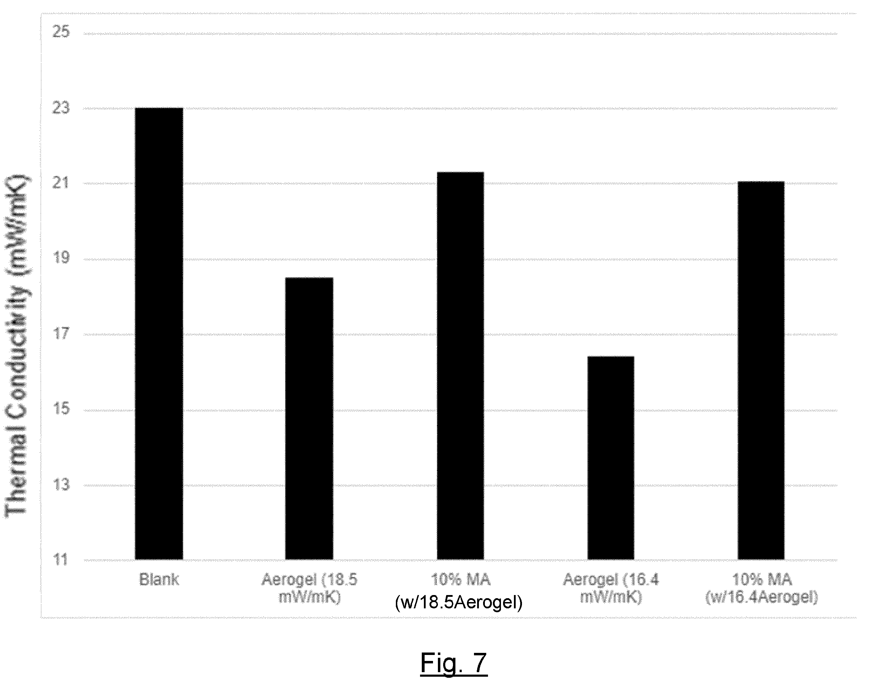

The graphs of Figures 6 and 7 plot thermal conductivity (TC, mW/mK) for various materials. In the graph of Figure 6, the plot labelled 'Blank' shows TC for the polyurethane foam of Comparative Example 4, and the plot labelled Aerogel shows TC for aerogel material prior to impregnation and incorporation into a composite foam. The plots labelled '4 Days' and '7 Days' show TC for composite foams incorporating aerogel at 4 days and 7 days after foaming, respectively, with varying levels of malonic acid loading. The graph of Figure 7 plots TC for the foam of Comparative Example 4 ("Blank"), an aerogel with a TC of 18.5 mw/mK prior to impregnation, an aerogel with a TC of 16.4 mW/mK and the composite foams of Examples 8 ("10% MA w/18.5 mW/mK Aerogel") and 11 ("10% MA w/16.4 mW/mK Aerogel").

The results disclosed herein demonstrate the ability of the pore protection methodology of the present invention to retain aerogel insulation properties and produce a super insulating composite material. Comparative Example 6 demonstrated a reduction in TC of 0.8 mW/mK when compared to a blank sample (i.e. equivalent foam without aerogel, Comparative Example 4). Without wishing to be bound by theory, it is believed that a small proportion of pores may remain free without protection by chemical gassing agent (giving a small TC improvement), but significant polymer ingress into the external pores has occurred. By "loading" the aerogel with a solid chemical gassing agent at 10%wt chemical gassing agent as compared to the weight of the aerogel, a total 1.7 mW/mK reduction of thermal conductivity when compared to the Blank has been achieved. The results of the examples show that reducing the Tc is directly correlated with the incorporation of malonic acid into aerogel prior to the foaming reaction, which is believed to protect the internal pore structure and allow retention of the thermal insulation properties of the aerogel. It is further believed that in the case of compounds such as 3-oxobutanoic acid (malonic acid), optimisation of chemical gassing agent loading may be desirable to maximise TC improvement, particularly in view of their reactivity with isocyanate to produce gaseous molecules as well as susceptibility to thermal degradation which may result in excessive gassing reactions (e.g. increasing TC) unless the overall formulation is adjusted. The results shown in the graph of Figure 7 demonstrate that the final thermal conductivity of the composite is a hybridisation of the polymeric material foam and aerogel insulation properties. Comparing Example 8 and 11 where the aerogel samples had thermal conductivities of 18.5 mW/mK and 16.4 mW/mK respectively, composites of 21.3 mW/mK and 21.08 mW/mK were obtained. There is a clear reduction in the overall thermal conductivity with the introduction of more insulating aerogels.

Aerogels are renowned for being highly brittle materials which can hinder their applicability to industrial applications. Often, difficulties have been encountered when attempting to scale up production of aerogel-containing products. Comparison of Examples 1 and 9 shows that the process is scalable without significant impact on TC. An advantage of the methodology for aerogel inclusion according to the present invention is that there is no requirement for alternative/specialist processing equipment beyond that currently utilized in industry, hence the product is capable of directly dropping into current production lines. Hybridisation of aerogel with a foam carrier material allows for retention of aerogel super insulation properties while also benefitting from the structural properties of the foam. The result is a composite material that can be handled without damage.

Aspects of the present invention are further disclosed by the following numbered clauses:
1. A process for making a composite material comprising a porous material affixed to a binder material, wherein the process comprises:
   providing a precursor mixture comprising impregnated porous material and precursor material for the binder material, wherein impregnated porous material is porous material impregnated with a chemical gassing agent wherein at least a portion of the chemical gassing agent is located in pores of the porous material, and wherein the precursor material for the binder material is in the form of a liquid and/or solution; and,
   forming the composite material from the precursor mixture by transforming the precursor material into the binder material and reacting the chemical gassing agent to release gas (e.g. propellant gas).
2. A process for making a composite material according to clause 1, wherein the composite material is a composite foam comprising particles of porous material (e.g. aerogel particles) embedded in a matrix of a polymeric binder material, wherein the process comprises: providing particles of porous material impregnated with the chemical gassing agent, wherein at least a portion of the chemical gassing agent is located in pores of the porous material; providing the precursor mixture as a reaction mixture comprising the impregnated particles of porous material and monomers for the polymeric material; and, forming the composite foam from the reaction mixture by reacting the chemical gassing agent to release gas and polymerising the monomers to form the polymeric material.
3. The process according to clause 1 or clause 2, wherein the composite material is a composite foam, and wherein the binder material is a foam material.
4. The process according to any preceding clause, wherein the composite material comprises particles or fibres of the porous material embedded in the binder material, and wherein the precursor mixture comprises impregnated porous material particles or fibres and the precursor material for the binder material, wherein impregnated porous material particles or fibres are particles or fibres of the porous material impregnated with the chemical gassing agent.
5. The process according to any one of clauses 1 to 3, wherein the composite material comprises at least one porous material substrate embedded into and/or at least partially containing the binder material, and wherein the precursor mixture is a combination of at least one impregnated porous material substrate and precursor material for the binder material, wherein an impregnated porous substrate is a porous material substrate impregnated with the chemical gassing agent.
6. The process according to any preceding clause, wherein the chemical gassing agent is a solid at standard temperature and pressure.
7. The process according to any preceding clause, wherein the chemical gassing agent releases gas by thermal degradation at or above a thermal degradation temperature, and wherein the step of forming the composite material is carried out at a temperature at or above the thermal degradation temperature of the chemical gassing agent so that the chemical gassing agent releases gas; optionally wherein the thermal degradation temperature of the chemical gassing agent is at least about 60°C; optionally wherein the process further comprises allowing the composite material to cool following the step of forming the composite material and subsequently heating the composite material to a temperature at or above the thermal degradation temperature of the chemical gassing agent so that any residual chemical gassing agent thermally degrades to release additional gas.
8. The process according to any preceding clause, wherein the chemical gassing agent releases gas by reaction with a reagent, and wherein the step of forming the composite material comprises contacting the chemical gassing agent with the reagent, for example wherein the binder material is a polymeric material and the reagent is a monomer for the polymeric material.
9. The process according to any preceding clause, wherein the binder material is a polymeric material (such as a polymeric foam material), the precursor material comprises monomers for the polymeric material, and transforming the precursor material into the binder material comprises polymerising the monomers to form the polymeric material.
10. The process according to any preceding clause, wherein the impregnated porous material (e.g. aerogel, such as aerogel particles) comprises the chemical gassing agent in an amount of from about 0.5 wt% to about 50 wt%, such as about 1 wt% to about 30 wt%, for example from about 5 wt% to about 25 wt%, based on the weight of the porous material prior to impregnation.
11. The process according to any preceding clause, wherein the chemical gassing agent comprises: azobisisobutyronitrile, an acyl azide, 3,4,5-trihydroxybenzoic acid, 3-oxopentanoic acid, dimethyl propane dioic acid, cyclohexanedicarboxylic acid, 2,5-dioxocyclohexane-1,4-dicarboxylic acid, and/or a metal carbonate.
12. The process according to any preceding clause, wherein the chemical gassing agent comprises a geminal diacid and/or a beta-keto acid.
13. The process according to clause 12, wherein the chemical gassing agent comprises one or more of: 3-oxobutanoic acid, acetonedicarboxylic acid, 2,2-dimethyl-3-oxobutanoic acid, 4-methyl-3-oxopentanoic acid, and cyclohexanone-2-carboxylic acid.
14. The process according to any preceding clause, wherein the binder material comprises polyurethane (PU) and/or polyisocyanurate (PIR) polymers.
15. The process according to clause 14, wherein the step of providing the precursor mixture comprises: providing a polyol precursor mixture comprising the impregnated aerogel particles and polyol monomers; and combining the polyol precursor mixture with isocyanate monomers to form the reaction mixture; optionally wherein the process comprises initially stirring the reaction mixture when the polyol precursor mixture is combined with the isocyanate monomers to homogenise the reaction mixture and subsequently allowing the reaction mixture to stand without stirring.
16. The process according to clause 15, wherein the polyol precursor mixture further comprises one or more of: an additional chemical blowing agent, a physical blowing agent, one or more catalysts, a surfactant, and a flame retardant; optionally wherein the polyol precursor mixture further comprises the additional chemical blowing agent and/or the physical blowing agent.
17. The process according to clause 16, wherein the additional chemical blowing agent is water.
18. The process according to clause 16 or clause 17, wherein the physical blowing agent is one or more of: a C4 to C7 alkane, such as butane, pentane, hexane, and/or heptane (including the isomers thereof); methylformate; carbon dioxide; a hydrofluoroether; a hydrogenated fluorocarbon; and a chlorofluorocarbon; optionally wherein the physical blowing agent is a C4 to C6 alkane, for example pentane (including the isomers thereof).
19. The process according to any one of clauses 15 to 18, wherein the chemical gassing agent comprises at least one carboxylic acid functional group, for example wherein the gassing agent is a C2 to C10 organic molecule comprising a carboxylic acid functional group; optionally wherein the chemical gassing agent comprises at least two carboxylic acid functional groups.
20. The process according to any one of clauses 15 to 19, wherein the polyol monomers comprise polyester polyols, aromatic polyester polyols, polyether polyols, polyethylene glycols, and/or vegetable oils (such as castor oil and/or cashew oil).
21. The process according to any one of clauses 15 to 20, wherein the isocyanate monomers comprise monomeric and/or polymeric compounds of: methylene diphenyl diisocyanate, polymethylene polyphenylene polyisocyanate, toluene diisocyanate, isophorone diisocyanate, lysine triisocyanate, methyl ester lysine diisocyante, and/or methylenebis(cyclohexyl isocyanate).
22. The process according to any preceding clause, wherein the composite foam has one or more of: a thermal conductivity of no more than about 35 mW/mK, such as no more than about 25 mW/mK; and/or a density of from about 20 to about 100 kg/m³, such as from about 25 to about 80 kg/m³.
23. A process of making a porous material (such as an aerogel, e.g. aerogel particles) impregnated with a chemical gassing agent, wherein at least a portion of the chemical gassing agent is located in pores of the porous material, and wherein the process comprises: providing an impregnation solution comprising the chemical gassing agent dissolved in a solvent; contacting a porous material with the impregnation solution to form an impregnation mixture; and removing the solvent from the impregnation solution to form the impregnated porous material.
24. The process according to clause 23, wherein: the impregnation solution comprises the chemical gassing agent in an amount of from about 1 mg/mL to about 1000 mg/mL, for example about 10 mg/mL to about 500 mg/mL; the impregnation mixture is stirred in order to homogenise the impregnation mixture prior to removal of the solvent; and/or the solvent is removed under reduced pressure, optionally while heating the impregnation mixture.
25. The process according to clause 23 or clause 24, wherein the solvent is a volatile solvent, optionally wherein the solvent is a polar solvent such as a C1-C3 polar organic solvent.
26. The process according to clause 25, wherein the solvent is one or more of acetone, water, methanol, ethanol, and propanol (e.g. isopropanol).
27. A process according to any one of clauses 1 to 22, comprising providing porous material impregnated with a chemical gassing agent by the process of any one of clauses 23 to 26.
28. The process according to any preceding clause, wherein the porous material comprises or is an aerogel, for example a silica aerogel, such as a hydrophobic silica aerogel.
29. The process according to clause 28, wherein the silica aerogel is a silylated silica aerogel comprising silyl groups bonded to surfaces of a porous silica framework, wherein the silyl groups are represented by the formula -SiRR'R'' wherein at least one of R, R' and R'' are an organic group comprising at least one SiC bond.
30. The process according to preceding clause, wherein the porous material comprises or is a pre-formed polymeric foam material; optionally wherein the binder material is a polymeric foam material and wherein the pre-formed polymeric foam material differs from the polymeric foam material in terms of one or more of the following properties: cellular structure (optionally wherein one of the polymeric foam material and the pre-formed polymeric foam material is an open cell foam material and the other is a closed cell foam material); compressive strength; impact resistance; tensile strength; softness; density; thermal conductivity, thermal resistance; and/or fire resistance.
31. The process according to any preceding clause, wherein the porous material comprises or is one or more of: artificial and/or or natural rock, clay or soil material; cementitious material; artificial and/or or natural bone material; ceramic material; zeolite and/or metal organic framework material; graphene; activated carbon; and/or slow release carrier substrate, such as a slow release medicine carrier substrate.
32. The process according to any preceding clause, wherein the porous material (such as aerogel, e.g. particles of aerogel), prior to impregnation, has one or more of: a density of from about 10 to about 1000 kg/m³ (such as from about 30 to about 180 kg/m³); a porosity of at least about 50% (such as at least about 90%; a surface area of from about 500 to about 1000 m²/g); a surface area of from about 1 to about 10000 m²/g (such as from about 500 to about 1000 m²/g); a thermal conductivity of no more than about 30 mW/mK (such as no more than about 20 mW/mK), as measured according to the method described herein; and a particle size of from about 1 micron to about 5 mm.
33. An impregnated porous material (such as an aerogel, e.g. particles of aerogel) impregnated with a chemical gassing agent, wherein at least a portion of the chemical gassing agent is located in pores of the porous material, and wherein the chemical gassing agent is (i) an organic compound, and/or (ii) a solid at standard temperature and pressure.
34. Impregnated porous material according to clause 33, wherein the chemical gassing agent releases gas by thermal degradation at or above a thermal degradation temperature; optionally wherein the thermal degradation temperature of the chemical gassing agent is at least about 60°C.
35. Impregnated porous material according to clause 33 or clause 34, wherein the chemical gassing agent releases gas by reaction with a reagent, for example wherein the reagent is a monomer for a polymeric material.
36. Impregnated porous material according to any one of clauses 33 to 35, comprising the chemical gassing agent in an amount of from about 0.5 wt% to about 50 wt%, such as about 1 wt% to about 30 wt%, for example from about 5 wt% to about 25 wt%, based on the weight of the impregnated porous material prior to impregnation.
37. Impregnated porous material according to any one of clauses 33 to 36, wherein the chemical gassing agent comprises: azobisisobutyronitrile, an acyl azide, 3,4,5-trihydroxybenzoic acid, 3-oxopentanoic acid, dimethyl propane dioic acid, cyclohexanedicarboxylic acid, 2,5-dioxocyclohexane-1,4-dicarboxylic acid, and/or a metal carbonate.
38. Impregnated porous material according to any one of clauses 33 to 37, wherein the chemical gassing agent comprises a carboxylic acid functional group, for example wherein the gassing agent is a C2 to C10 organic molecule comprising a carboxylic acid functional group.
39. Impregnated porous material according to any one of clauses 33 to 38, wherein the chemical gassing agent comprises at least two carboxylic acid functional groups, optionally wherein chemical gassing agent is a geminal diacid, for example 3-oxobutanoic acid.
40. Impregnated porous material according to any one of clauses 33 to 39, wherein the chemical gassing agent is a beta-keto acid, for example wherein the chemical gassing agent comprises one or more of: acetonedicarboxylic acid, 2,2-dimethyl-3-oxobutanoic acid, 4-methyl-3-oxopentanoic acid, and cyclohexanone-2-carboxylic acid.
41. Impregnated porous material according to any one of clauses 33 to 40, wherein the porous material is an aerogel, such as a silica aerogel, such as a hydrophobic silica aerogel.
42. Impregnated porous material according to clause 41, wherein the silica aerogel is a silylated silica aerogel comprising silyl groups bonded to surfaces of a porous silica framework, wherein the silyl groups are represented by the formula -SiRR'R" wherein at least one of R, R' and R" are an organic group comprising at least one SiC bond.
43. Impregnated porous material of any one of clauses 33 to 42, wherein the porous material is a pre-formed polymeric foam material; optionally wherein the binder material is a polymeric foam material and wherein the pre-formed polymeric foam material differs from the polymeric foam material in terms of one or more of the following properties: cellular structure (optionally wherein one of the polymeric foam material and the pre-formed polymeric foam material is an open cell foam material and the other is a closed cell foam material); compressive strength; impact resistance; tensile strength; softness; density; thermal conductivity; thermal resistance; and/or fire resistance.
44. Impregnated porous material of any one of clauses 33 to 43, wherein the porous material comprises one or more of: artificial and/or or natural rock, clay or soil material; cementitious material; artificial and/or or natural bone material; ceramic material; zeolite and/or metal organic framework material; graphene; activated carbon; and/or slow release carrier substrate, such as a slow release medicine carrier substrate.
45. Impregnated porous material of any one of clauses 33 to 44, wherein the porous material prior to impregnation is a microporous, mesoporous and/or microporous material and/or has one or more of: a density of from about 10 to about 1000 kg/m³ (such as from about 30 to about 180 kg/m³); a porosity of at least about 50% (such as at least about 90%); a surface area of from about 1 to about 10000 m²/g (such as from about 500 to about 1000 m²/g); a thermal conductivity of no more than about 30 mW/mK (such as no more than about 20 mW/mK), as measured according to the method described herein; and a particle size of from about 1 micron to about 5 mm.
46. A polyol precursor mixture for a polyurethane (PU) and/or polyisocyanurate (PIR) composite foam, wherein the polyol precursor mixture is a fluid composition comprising polyol monomers and particles of a porous material (e.g. aerogel) impregnated with a chemical gassing agent, wherein at least a portion of the chemical gassing agent is located in pores of the porous material.
47. The polyol precursor mixture of clause 46, wherein the particles of porous material impregnated with a chemical gassing agent are particles of porous material according to any one of clauses 33 to 45.
48. The polyol precursor mixture according to clause 46 or clause 47, comprising water, a physical blowing agent and/or one or more catalysts.
49. The polyol precursor mixture according to any one of clauses 46 to 48, further comprising one or more of: an additional chemical blowing agent, a physical blowing agent, one or more catalysts, a surfactant, and a flame retardant; optionally wherein the polyol precursor mixture further comprises the additional chemical blowing agent and/or the physical blowing agent.
50. The polyol precursor mixture according to clause 49, wherein the additional chemical blowing agent is water.
51. The polyol precursor mixture according to clause 49 or clause 50, wherein the physical blowing agent is one or more of: a C4 to C7 alkane, such as butane, pentane, hexane, and/or heptane, including the isomers thereof; methylformate; carbon dioxide; a hydrofluoroether; a hydrogenated fluorocarbon; and a chlorofluorocarbon; optionally wherein the physical blowing agent is a C4 to C6 alkane, for example pentane, including the isomers thereof.
52. The polyol precursor mixture according to any one of clauses 46 to 51, wherein the polyol monomers comprise polyester polyols, aromatic polyester polyols, polyether polyols, polyethylene glycols, and/or vegetable oils (such as castor oil and/or cashew oil).
53. A method of making a polyol precursor mixture according to any one of clauses 46 to 52, comprising combining with polyol monomers the particles of porous material impregnated with a chemical gassing agent, optionally wherein the process further comprises stirring the polyol precursor mixture.
54. The method according to clause 53, comprising making the particles of porous material impregnated with a chemical blowing agent by the process of any one of clauses 23 to 32.
55. A composite material (such as a composite foam) made by the process according to any one of clauses 1 to 22 or 28 to 32.
56. An insulation product comprising a composite foam according to clause 55, wherein the insulation product is an insulation board or spray insulation.
57. A spray foam kit comprising (i) a first vessel containing a polyol precursor mixture according to any one of clauses 46 to 52, and (ii) a second vessel containing an isocyanate precursor mixture; wherein the isocyanate precursor mixture is a fluid composition comprising isocyanate monomers.
58. A spray foam kit according to clause 57, wherein the isocyanate monomers comprise monomeric and/or polymeric compounds of: methylene diphenyl diisocyanate, polymethylene polyphenylene polyisocyanate, toluene diisocyanate, isophorone diisocyanate, lysine triisocyanate, methyl ester lysine diisocyanate, and/or methylenebis(cyclohexyl isocyanate).
59. A spray foam dispenser comprising the spray foam kit according to clause 57 or clause 58, wherein the first vessel and the second vessel are fluidly connected to a mixing chamber and/or mixing nozzle for combining the polyol precursor mixture and the isocyanate precursor mixture.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A process for making a composite material comprising a porous material affixed to a binder material, wherein the process comprises:
providing a precursor mixture comprising impregnated porous material and precursor material for the binder material, wherein impregnated porous material is porous material impregnated with a chemical gassing agent wherein at least a portion of the chemical gassing agent is located in pores of the porous material, and wherein the precursor material for the binder material is in the form of a liquid and/or solution; and,
forming the composite material from the precursor mixture by transforming the precursor material into the binder material and reacting the chemical gassing agent to release a gas, optionally wherein the binder material is a foam material.

2. The process according to claim 1, wherein:
(i) the composite material comprises particles of the porous material embedded in the binder material, and wherein the precursor mixture comprises impregnated porous material particles or fibres and the precursor material for the binder material, wherein impregnated porous material particles or fibres are particles or fibres of the porous material impregnated with the chemical gassing agent; or
(ii) the composite material comprises at least one porous material substrate embedded into and/or at least partially containing the binder material, and wherein the precursor mixture is a combination of at least one impregnated porous material substrate and precursor material for the binder material, wherein an impregnated porous substrate is a porous material substrate impregnated with the chemical gassing agent.

3. The process according to claim 1 or claim 2, wherein the chemical gassing agent is a solid at standard temperature and pressure.

4. The process according to any preceding claim, wherein:
(a) the chemical gassing agent releases gas by thermal degradation at or above a thermal degradation temperature, and wherein the step of forming the composite material is carried out at a temperature at or above the thermal degradation temperature of the chemical gassing agent so that the chemical gassing agent releases gas;
optionally wherein the thermal degradation temperature of the chemical gassing agent is at least about 60°C;
optionally wherein the process further comprises allowing the composite material to cool following the step of forming the composite material and subsequently heating the composite material to a temperature at or above the thermal degradation temperature of the chemical gassing agent so that any residual chemical gassing agent thermally degrades to release additional gas; and/or
(b) the chemical gassing agent releases gas by reaction with a reagent, and wherein the step of forming the composite material comprises contacting the chemical gassing agent with the reagent, for example wherein the binder material is a polymeric material and the reagent is a monomer for the polymeric material.

5. The process according to any preceding claim, wherein the binder material is a polymeric material (such as a polymeric foam material), the precursor material comprises monomers for the polymeric material, and transforming the precursor material into the binder material comprises polymerising the monomers to form the polymeric material;
optionally wherein the polymeric material of the composite material comprises polyurethane (PU) and/or polyisocyanurate (PIR) polymers; optionally wherein the step of providing the precursor mixture comprises:
providing a polyol mixture comprising the impregnated porous material and polyol monomers; and
combining the polyol mixture with isocyanate monomers to form the precursor mixture;
optionally wherein the process comprises initially stirring the precursor mixture when the polyol mixture is combined with the isocyanate monomers to homogenise the reaction mixture and subsequently allowing the reaction mixture to stand without stirring;
optionally wherein the chemical gassing agent comprises at least one carboxylic acid functional group, for example wherein the gassing agent is a C₂ to C₁₀ organic molecule comprising a carboxylic acid functional group;
optionally wherein the chemical gassing agent comprises at least two carboxylic acid functional groups.

6. A process of making an impregnated porous material, wherein impregnated porous material is porous material impregnated with a chemical gassing agent wherein at least a portion of the chemical gassing agent is located in pores of the porous material, and wherein the process comprises:
providing an impregnation solution comprising the chemical gassing agent dissolved in a solvent, optionally wherein the impregnation solution comprises the chemical gassing agent in an amount of from about 1 mg/mL to about 1000 mg/mL, for example about 10 mg/mL to about 500 mg/mL;
contacting a porous material with the impregnation solution to form an impregnation mixture; and
removing the solvent from the impregnation solution to form the impregnated porous material.

7. The process according to any one of claims 1 to 5, comprising providing impregnated porous material according to the process of claim 6.

8. Impregnated porous material, wherein impregnated porous material is porous material impregnated with a chemical gassing agent wherein at least a portion of the chemical gassing agent is located in pores of the porous material, and wherein the chemical gassing agent is (i) an organic compound, and/or (ii) a solid at standard temperature and pressure;
optionally wherein:
the chemical gassing agent releases gas by thermal degradation at or above a thermal degradation temperature; optionally wherein the thermal degradation temperature of the chemical gassing agent is at least about 60°C; and/or
the chemical gassing agent releases gas by reaction with a reagent, for example wherein the reagent is a monomer for a polymeric material.

9. The process according to any of claims 1 to 7, or the impregnated porous material of claim 8, wherein the impregnated porous material comprises the chemical gassing agent in an amount of from about 0.5 wt% to about 50 wt%, such as about 1 wt% to about 30 wt%, for example from about 5 wt% to about 25 wt%, based on the weight of the porous material prior to impregnation.

10. The process according to any of claims 1 to 7 or 9, or the impregnated porous material of claim 8 or 9, wherein the chemical gassing agent comprises:
azobisisobutyronitrile,
an acyl azide,
3,4,5-trihydroxybenzoic acid,
3-oxopentanoic acid,
dimethyl propane dioic acid,
cyclohexanedicarboxylic acid,
2,5-dioxocyclohexane-1,4-dicarboxylic acid, and/or
a metal carbonate.

11. The process according to any one of claims 1 to 7, 9 or 10, or the impregnated porous material of any one of claims 8 to 10, wherein the chemical gassing agent comprises a geminal diacid and/or a beta-keto acid; optionally wherein the chemical gassing agent comprises one or more of:
3-oxobutanoic acid,
acetonedicarboxylic acid,
2,2-dimethyl-3-oxobutanoic acid,
4-methyl-3-oxopentanoic acid, and
cyclohexanone-2-carboxylic acid.

12. The process according to any of claims 1 to 7 or 9 to 11, or the impregnated porous material of any one of claims 8 to 11, wherein the porous material is an aerogel, optionally wherein the aerogel is a silica aerogel, such as a hydrophobic silica aerogel; optionally wherein the silica aerogel is a silylated silica aerogel comprising silyl groups bonded to surfaces of a porous silica framework, wherein the silyl groups are represented by the formula -SiRR'R" wherein at least one of R, R' and R" are an organic group comprising at least one Si-C bond.

13. The process according to any one of claims 1 to 7, or 9 to 11, or the impregnated porous material of any one of claims 8 to 11, wherein the porous material is a pre-formed polymeric foam material;
optionally wherein the binder material is a polymeric foam material and wherein the pre-formed polymeric foam material differs from the polymeric foam material in terms of one or more of the following properties:
cellular structure (optionally wherein one of the polymeric foam material and the pre-formed polymeric foam material is an open cell foam material and the other is a closed cell foam material, preferably wherein the pre-formed polymeric foam material is an open cell foam material);
compressive strength;
impact resistance;
tensile strength;
softness;
density;
thermal conductivity;
thermal resistance; and/or
fire resistance.

14. The process according to any one of claims 1 to 7, or 9 to 11, or the impregnated porous material of any one of claims 8 to 11, wherein the porous material comprises one or more of:
artificial and/or or natural rock, clay or soil material;
cementitious material;
artificial and/or or natural bone material;
ceramic material;
zeolite and/or metal organic framework material;
graphene;
activated carbon; and/or
slow release carrier substrate, such as a slow release medicine carrier substrate.

15. The process according to any of claims 1 to 7 or 9 to 14, or the impregnated porous material of any one of claims 8 to 14, wherein the porous material prior to impregnation is a microporous, mesoporous and/or macroporous material and/or has one or more of:
a density of from about 10 to about 1000 kg/m³ (such as from about 30 to about 180 kg/m³);
a porosity of at least about 50% (such as at least about 90%);
a surface area of from about 1 to about 10000 m²/g (such as from about 500 to about 1000 m²/g);
a thermal conductivity of no more than about 30 mW/mK (such as no more than about 20 mW/mK); and
a particle size of from about 1 micron to about 5 mm.
